(19) Europäisches Patentamt
European Patent Office
Office européen des brevets

(11) **EP 1 608 166 B1**

(12) **EUROPEAN PATENT SPECIFICATION**

(45) Date of publication and mention
of the grant of the patent:
**22.08.2012 Bulletin 2012/34**

(21) Application number: **04710542.4**

(22) Date of filing: **12.02.2004**

(51) Int Cl.:
*H04N 5/92* (2006.01)     *G11B 20/10* (2006.01)
*H04N 5/76* (2006.01)     *H04N 5/84* (2006.01)
*H04N 9/79* (2006.01)     *H04N 9/804* (2006.01)
*H04N 21/433* (2011.01)   *H04N 21/488* (2011.01)

(86) International application number:
**PCT/JP2004/001506**

(87) International publication number:
**WO 2004/073305 (26.08.2004 Gazette 2004/35)**

(54) **DATA PROCESSING DEVICE**

DATENVERARBEITUNGSEINRICHTUNG

DISPOSITIF DE TRAITEMENT DE DONNEES

(84) Designated Contracting States:
**DE FR GB**

(30) Priority: **13.02.2003   JP 2003034843**
**13.02.2003   JP 2003034841**
**13.02.2003   JP 2003034842**

(43) Date of publication of application:
**21.12.2005   Bulletin 2005/51**

(73) Proprietor: **Panasonic Corporation**
**Kadoma-shi**
**Osaka 571-8501 (JP)**

(72) Inventors:
• **FUKUDA, Hideki**
**Nara 631-0843 (JP)**

• **KAWASAKI, Kojiro**
**Osaka 576-0041 (JP)**

(74) Representative: **Grünecker, Kinkeldey,**
**Stockmair & Schwanhäusser**
**Leopoldstrasse 4**
**80802 München (DE)**

(56) References cited:
EP-A2- 1 168 347     EP-A2- 1 206 134
JP-A- 2002 152 657   JP-A- 2002 222 586
JP-A- 2002 313 067   JP-A- 2002 374 498
JP-A- 2003 324 684   US-A1- 2002 159 751

**Description**

**TECHNICAL FIELD**

The present invention relates to an apparatus which is capable of recording onto a storage medium a plurality of types of input signals, e.g., an analog television signal, a digital television signal, and the like.

**BACKGROUND ART**

Conventionally, there are known apparatuses which have a plurality of recording processing paths, and which perform recording by selecting a particular path when recording a video signal onto a storage medium. For example, a recording apparatus described in Japanese Laid-Open Patent Publication No. 7-23339 (data processing apparatus) receives a video signal in a digital stream, and record the signal on a storage medium by selecting an appropriate mode (recording processing path) from among: videorecording mode 1, under which the signal is directly recorded onto a storage medium; videorecording mode 2, under which the digital stream is decoded and thereafter recorded; and videorecording mode 3, under which the digital stream is decoded, and thereafter subjected to an intra-mode compression encoding and recorded.

When recording a video signal onto a storage medium, it is sometimes the case that a remaining duration for which recording is possible is calculated. This calculation is generally performed by dividing the remaining capacity of the storage medium by a recording rate. For example, a recording apparatus described in Japanese Laid-Open Patent Publication No. 11-328937, in the case where a compression encoding is performed with a variable bit rate (i.e., the recording rate varies), ascertains the remaining duration based on a current compression bit rate and remaining capacity, and displays the remaining duration. Japanese Laid-Open Patent Publication No. 11-112897 discloses a technique which detects a data amount or data rate based on program information which is transmitted along with the video/audio data, and judges whether it is possible to perform recording on a storage medium or not.

Document EP 1 168 347 A2 relates to a remaining recordable time calculation apparatus that converts an amount of free area of a recording medium into the remaining recording time period. As an example of a recording medium, an optical disk is given.

Document EP 1 206 134 A2 relates to a recording rate automatic setting recording device capable of operating with multiple types of recording media, such as HDD and DVD (-RAM). A recording bit rate is calculated based on a remaining capacity of the disk and a predetermined recording time.

Document JP 2002 222586 A describes a recording equipment capable of detecting and discriminating a plurality of possible recording media (in particular: distinguished by having different capacities). An encoding recording process with ATRAC3 cooperation is possible, as well as recording without compression.

Documents JP 2002 313067 A and JP 2002 374498 A describes a selection of different recording processes based on a calculated remaining capacity of a single recording medium. Document JP 2002 374498 A relates particularly to TV signals and describes performing a re-encoding if desired, in order to record in the best possible quality.

As a video compression encoding scheme used in a digital broadcast and used in recording onto a DVD, an MPEG encoding scheme is generally used. For example, in a BS digital broadcast, a video signal is transmitted in the form of a well-known MPEG transport stream, and recorded onto a Blu-ray disc (BD) by using a blue-violet laser. Moreover, a video signal is recorded onto a DVD in the form of a well-known MPEG program stream. In such MPEG streams, encoded streams which have been obtained by compression encoding subjecting information such as video and audio to a compression encoding are multiplexed. However, bit rates of the video and audio signals vary depending on the qualities of the video and audio, respectively.

In a conventional recording apparatus, although different recording methods are used depending on the type of input signal and the type of storage medium, the recording apparatus calculates a remaining duration by using a fixed data rate which has previously been determined, regardless of the recording method. Therefore, it has been impossible to determine an accurate remaining duration. For example, in a mode of directly recording a digital stream (stream recording), the data rate may vary, so that it is impossible to accurately calculate a remaining duration with a fixed data rate. Moreover, in a stream recording, the recording apparatus cannot control the data rate of the data stream; therefore, if the data is erased later, it is impossible to guarantee a recording for a duration corresponding to the erased duration. Therefore, there also exists a problem in that an accurate remaining duration cannot be obtained if the remaining duration after an erasure is calculated by the same method.

The present invention has been made in view of the aforementioned problems, and an objective thereof is to determine a recording method based on a type of input signal and a type of storage medium, as well as to determine a remaining amount calculation method which is in accordance with the recording method, and calculate an accurate remaining duration.

**DISCLOSURE OF INTENTION**

This is achieved by the features of the independent claims.

The storage media may be differentiated in type depending on recording capacity; the receiving section may receive one of the signals of a digital signal and an analog signal; the recording processing section may select the encode recording process for any storage medium having a recording capacity equal to or lees than a predetermined reference capacity; and the calculation section may select a second remaining amount calculation process.

The encode recording process may include a first encode recording process of subjecting the program data to a decoding and thereafter an encoding process and a second encode recording process of subjecting the program data to an encoding process; the recording processing section may select the first encode recording process when the receiving section receives the digital signal, and selects the second encode recording process when the receiving section receives the analog signal; and the calculation section may calculate the remaining duration by performing the second remaining amount calculation process based further on a recording rate and on a recorded duration representing an amount of time for which a recording process has been performed.

A memory for storing a reference recording duration may be further included, the reference recording duration representing a maximum duration for which the program data can be recorded on the unused storage medium, wherein, the calculation section may calculate a reference recorded duration by normalizing the recorded duration with the recording rate, determine a reference remaining duration by subtracting the reference recorded duration from the reference recording duration stored in the memory, and calculate the remaining duration based on the reference remaining duration and on the encoding rate.

The storage media may be differentiated in type depending on recording capacity; the receiving section may receive a digital signal; the recording processing section may select the stream recording process for any storage medium having a recording capacity equal to or greater than a predetermined reference capacity; and the calculation section may select the first remaining amount calculation process.

The signal may include program information specifying a transmission rate and a broadcasting duration of the program data, the data processing apparatus further including a controller for extracting the program information from the received signal, wherein the calculation section may calculate the remaining duration based on the extracted transmission rate and broadcasting duration.

The calculation section may calculate a data amount of each of one or more program data based on the transmission rate and broadcasting duration, determine a cumulative data amount obtained by cumulatively adding each data amount until exceeding the remaining capacity, and determining a cumulative broadcasting duration obtained by cumulatively adding each broadcasting duration corresponding to the added data amount, and determine the remaining duration by subtracting a broadcasting duration corresponding to any data amount exceeding the remaining capacity from the cumulative broadcasting duration.

The storage media may be differentiated in type depending on recording capacity; the receiving section may receive an analog signal; the recording processing section may select the encode recording process for any storage medium having a recording capacity equal to or greater than a predetermined reference capacity; and the calculation section may calculate the remaining duration by performing the second remaining amount calculation process based further on the remaining capacity of the storage medium.

The display section may further display information identifying the recording process selected by the recording processing section.

The display section may display at least one of the encoding rate, a resolution, and a frequency if the encode recording process is selected by the recording processing section.

The storage media may be differentiated in type depending on recording capacity; the receiving step may receive one of the signals of a digital signal and an analog signal; the recording step may select the encode recording process for any storage medium having a recording capacity equal to or lees than a predetermined reference capacity; and the calculating step may select a second remaining amount calculation process.

The encode recording process may include a first encode recording process of subjecting the program data to a decoding and thereafter an encoding process and a second encode recording process of subjecting the program data to an encoding process; the recording step may select the first encode recording process when the receiving section receives the digital signal, and selects the second encode recording process when the receiving section receives the analog signal; and the calculating step may calculate the remaining duration by performing the second remaining amount calculation process based further on a recording rate and on a recorded duration representing an amount of time for which a recording process has been performed.

A step of storing a reference recording duration may be further included, the reference recording duration representing a maximum duration for which the program data can be recorded on the unused storage medium, wherein, the calculating step may calculate a reference recorded duration by normalizing the recorded duration with the recording rate, determine a reference remaining duration by subtracting the reference recorded duration from the reference recording duration stored in the memory, and calculate the remaining duration based on the reference remaining duration and on the encoding rate.

The storage media may be differentiated in type depending on recording capacity; the receiving step may receive a digital signal; the recording step may select the stream recording process for any storage medium having a recording capacity equal to or greater than a predetermined reference capacity; and the calculating step may select the first remaining amount calculation process.

The signal may include program information specifying a transmission rate and a broadcasting duration of the program data, the data processing method further including a step of extracting the program information from the received signal, wherein the calculating step may calculate the remaining duration based on the extracted transmission rate and broadcasting duration.

The calculating step may calculate a data amount of each of one or more program data based on the transmission rate and broadcasting duration, determine a cumulative data amount obtained by cumulatively adding each data amount until exceeding the remaining capacity, and determining a cumulative broadcasting duration obtained by cumulatively adding each broadcasting duration corresponding to the added data amount, and determine the remaining duration by subtracting a broadcasting duration corresponding to any data amount exceeding the remaining capacity from the cumulative broadcasting duration.

The storage media may be differentiated in type depending on recording capacity; the receiving step may receive an analog signal; the recording step may select the encode recording process for any storage medium having a recording capacity equal to or greater than a predetermined reference capacity; and the calculating step may calculate the remaining duration by performing the second remaining amount calculation process based further on the remaining capacity of the storage medium.

The displaying step may further display information identifying the recording process selected by the recording processing section.

The displaying step may display at least one of the encoding rate, a resolution, and a frequency if the encode recording process is selected by the recording processing section.

## BRIEF DESCRIPTION OF DRAWINGS

FIG. **1** is a diagram showing the constitution of functional blocks in a data processing apparatus **10** according to Embodiment 1.

FIG. **2** is a diagram showing an exemplary constitution of functional blocks in a self-encode recording processing section **107.**

FIG. **3** is a diagram showing an exemplary constitution of functional blocks in a re-encode recording processing section **106.**

FIG. **4** is a diagram showing an example of a control table.

FIG. **5(a)** is a diagram showing examples of text characters which can be displayed on a display section **114.**

FIGS. 5(b) to (d) are diagrams showing examples of display patterns.

FIG. **6** is a chart showing the procedure of a remaining amount calculation process.

FIG. **7** is a chart showing a recording process determining procedure.

FIG. **8** is a chart showing the calculation procedure of a remaining amount calculation process (1b).

FIG. **9** is a diagram showing an example of program information which is stored in a program information table **420.**

FIG. **10** is a diagram showing a relationship between times of recording of programs and data amount to be recorded.

FIG. **11** is a chart showing the calculation procedure of a remaining amount calculation process (1c).

FIG. **12** is a diagram showing a data structure of program data which is recorded onto a storage medium **112** through a recording process by the recording processing section **121.**

FIG. **13** is a diagram showing the constitution of a data processing apparatus **20** having a reproduction function.

FIG. **14** is a chart showing the procedure of a remaining amount calculation process which is based on the type of the storage medium **112** and on the recording process type.

FIG. **15** is a chart showing the procedure of a remaining amount calculation process which is based on the type of the storage medium **112** and on the type of the input signal.

FIG. **16(a)** is a diagram showing a display section **114** having a videorecording mode displaying function.

FIGS. 16(b) to (d) are diagrams showing examples of display patterns.

FIG. **17** is a flowchart showing a mode determining procedure for the data processing apparatus **10** according to the present embodiment.

FIG. **18** is a diagram showing an exemplary control table. FIG. **19** is a chart showing a recording process determining procedure in a manual mode recording process.

FIGS. **20(a)** to **(o)** are diagrams showing examples of display patterns on a display section **114** having a videorecording mode displaying function.

FIG. **21(a)** is a diagram showing examples of display tubes in the display section **114.**

FIGS. 21(b) to (g) are diagrams showing display states which may be taken by the display section **114.**

FIG. **22** is a diagram showing a control table under an auto mode.

FIG. **23** is a diagram showing a control table under a BXP mode.

FIG. **24** is a diagram showing a control table under an XP mode.

FIG. **25** is a diagram showing a control table under an SP mode.

FIG. **26** is a diagram showing a control table under an LP mode.

FIG. **27** is a diagram showing a display pattern on the display section **114** in accordance with the type of the storage medium **112,** type of the input source, and the like, under the auto mode.

FIG. **28** is a diagram showing a display pattern on the display section **114** in accordance with the type of the storage medium **112,** type of the input source, and the like, under the BXP mode.

FIG. **29** is a diagram showing a display pattern on the display section **114** in accordance with the type of the storage medium **112,** type of the input source, and the like, under the XP mode.

FIG. **30** is a diagram showing a display pattern on the display section **114** in accordance with the type of the storage medium **112,** type of the input source, and the like, under the SP mode.

FIG. **31** is a diagram showing a display pattern on the display section **114** in accordance with the type of the storage medium **112,** type of the input source, and the like, under the LP mode.

FIG. **32(a)** is a diagram showing examples of text characters which can be displayed on the display section **114.**

FIGS. **32(b)** to **(f)** are diagrams showing display patterns on the display section **114.**

FIG. **33(a)** is a diagram showing examples of text characters which can be displayed on the display section **114.**

FIGS. **33(b)** to **(f)** are diagrams showing examples of text characters which can be displayed on the display section **114.**

## BEST MODE FOR CARRYING OUT THE INVENTION

(Embodiment 1)

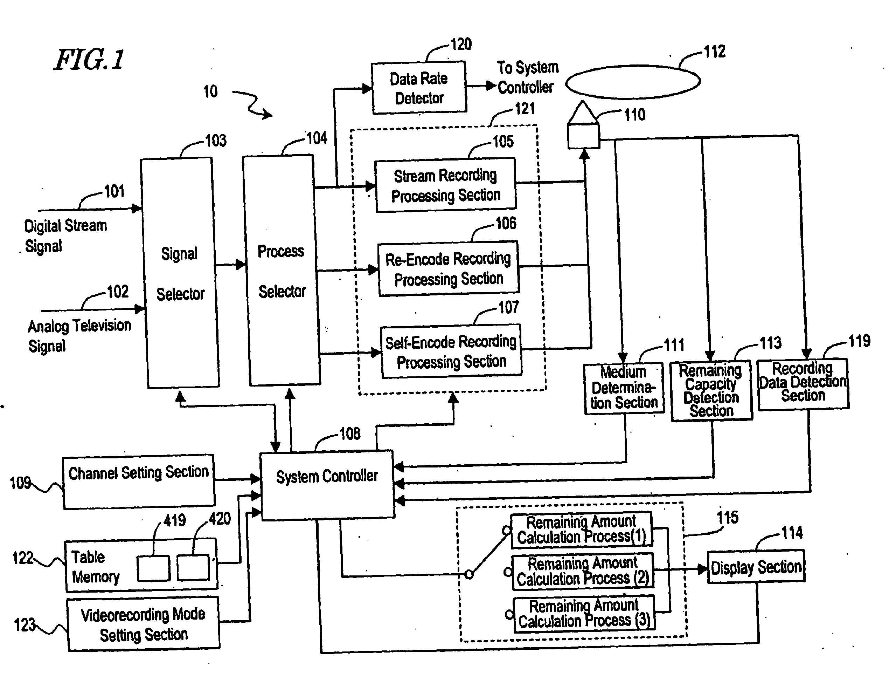

FIG. **1** shows the constitution of functional blocks in a data processing apparatus **10** according to the present embodiment. For a plurality of types of storage media having different recording capacities, the data processing apparatus **10** is capable of writing and/or reading program data which is obtained based on a digital stream signal or an analog television signal.

The plurality of types of storage media may be, for example: a DVD-RAM medium which has a recording capacity of 4.7 Gbytes and for which recording is performed with a recording rate of 22 Mbps; an ultrahigh density RAM medium which has a recording capacity of 23 Gbytes and for which recording is performed with 33 Mbps, e.g., a Blu-ray disc (BD); a hard disk which has a capacity of tens of Gbytes to hundreds of Gbytes or more; and the like. The ultrahigh density RAM medium may be used with a laser having shorter wavelength than that of a blue laser or the like, and retains data based on marks, pits, and the like on the medium.

In accordance with the type of the storage medium **112** and the type of the input signal, the data processing apparatus **10** is capable of recording data by selecting one recording process from among a plurality of recording processes featuring different recording rates, encoding methods, and the like. Furthermore, in accordance with the selected recording process, the data processing apparatus **10** is capable of determining a remaining duration for which it is possible to perform recording for the storage medium **112** (hereinafter simply referred to as the "remaining duration") by selecting from among a plurality of remaining amount calculation processes. The reason for requiring a plurality of remaining amount calculation processes is that the remaining duration of the storage medium **112** will differ depending on the recording process. The calculated remaining duration is displayed in a manner to allow confirmation by a user, or is made available to the data processing apparatus **10** for a later recording operation.

Although the storage medium **112** is illustrated in FIG. **1,** the storage medium **112** would be constituent element of the data processing apparatus **10** if the storage medium **112** is a hard disk, and would not be a constituent element of the data processing apparatus **10** if the storage medium **112** is a removable storage medium such as an optical disk. In the following descriptions, it is assumed that the storage medium **112** is a DVD-RAM medium or an ultrahigh density RAM medium. Therefore, the data processing apparatus **10** functions as a well-known optical disc recorder. It is also assumed that the signals which are input to the data processing apparatus **10** are a digital stream signal **101** and an analog television signal **102.**

The digital stream signal **101** is transmitted by a BS digital broadcast, for example. In a BS digital broadcast, video is compression-encoded by an MPEG2 video encoding scheme; an audio signal is compression-encoded by an AACencoding scheme; and the video stream and audio stream are multiplexed into an MPEG transport stream for transmission.

On the other hand, the analog television signal **102** may be a television signal which is transmitted by an analog terrestrial broadcast, for example. Note that a digital stream signal for a Hi-Vision broadcast under the current BS digital broadcasting has a data rate of 24 Mbps. Therefore, although a Hi-Vision digital stream signal (e.g., an MPEG transport stream) cannot be directly recorded onto a DVD-RAM medium having a recording rate of 22 Mbps, it can be directly recorded onto an ultrahigh density RAM medium. A digital stream signal or an analog signal of a general standard resolution can be directly recorded onto either one of a DVD-RAM medium and an ultrahigh density RAM medium.

In an MPEG encoding scheme, compression-encoding of each frame data is performed by utilizing the pixel values in each frame composing the video. Specifically, adaptive switching is made between an intra-frame encoding process which encodes image data by utilizing intra-frame correlation between pixel values, and an inter-frame encoding process which encodes image data by utilizing inter-frame correlation between pixel values. In such encoding processes, encoded data corresponding to a plurality of consecutive frames is regarded as one unit.

Hereinafter, the constitution of the data processing apparatus **10** will be described. The data processing apparatus **10** includes a signal selector **103**, a process selector **104**, a system controller **108**, a channel setting section **109**, a recording head **110**, a medium determination section **111**, a remaining capacity detection section **113**, a display section **114**, a remaining amount calculation section **115**, a recording data detection section **119**, a data rate detector **120**, a recording processing section **121**, a table memory **122**, and a videorecording mode setting section **123**. Among the above, the system controller **108** is a central processing unit (CPU) which controls the operation of the entire data processing apparatus **10**. The operation of the system controller **108** will be described, as necessary, in connection with the description of each constituent element.

The signal selector **103** is controlled by the system controller **108,** and selects either the digital stream signal **101** or the analog television signal **102** for output, in accordance with the selected channel information. In the case of a channel which is transmitted by BS broadcast waves, the signal selector **103** outputs the digital stream signal **101**. On the other hand, in the case of a channel of analog terrestrial broadcast waves, the signal selector **103** outputs a video signal and an audio signal as the analog television signal **102.**

The process selector **104** is controlled by the system controller **108,** and selects one of a plurality of recording processes to be executed at the recording processing section **121**. In the present embodiment, it is assumed that three types of recording processes exist.

The channel setting section **109** is an interface with which the user switches channels on which to perform recording, and may be a button disposed on the front panel of the data processing apparatus **10,** a remote control, a graphical user interface on the screen, or the like. The selected channel information is notified to the system controller **108.**

In the present embodiment, the recording head **110** is an optical pickup. The optical pickup is capable of recording data by radiating laser of a wavelength which is in accordance with the type of the storage medium **112** onto the storage medium **112,** and reading data by detecting reflected light from the storage medium **112.**

The medium determination section **111** determines the type of the optical disk which is loaded to the data processing apparatus **10**. In the present embodiment, it is determined which medium between a DVD-RAM medium and an ultrahigh density RAM medium, has been inserted. For example, determination information for specifying a storage medium type may be recorded at an inner peripheral portion of the storage medium at the time of manufacture, and the medium determination section **111** may optically read the determination information by using the recording head **110**. Alternatively, since the intensity of the reflected light upon laser light irradiation differs depending on the type of storage medium, the intensity may be detected and subjected to determination by the medium determination section **111**. Alternatively, in the case where the storage medium is loaded in a form accommodated within a cartridge, determination may be made based on the cartridge shape, which should differ depending on the type of storage medium. In any case, detection may be made by utilizing the optical characteristics and physical characteristics of the optical disk which is loaded.

The remaining capacity detection section **113** detects, as a remaining capacity, a capacity left on the storage medium **112** which permits recording. Specifically, the remaining capacity detection section **113** may read management information which is recorded on the storage medium **112,** and perform the detection based on the data size or the like of the data that has already been recorded.

The display section **114** displays the remaining duration which has been calculated by and notified from the remaining amount calculation section **115**. The display section **114** displays information for specifying a process which has been selected and being executed in the recording processing section **121**. The display section **114** is, for example, electric display tubes, a liquid crystal panel, a television screen, or the like disposed on the front panel.

The remaining amount calculation section **115** calculates a remaining duration for which it is possible to perform recording on the storage medium **112**. The remaining amount calculation section **115,** which is capable of executing a plurality of remaining amount calculation processes, receives from the system controller **108** an instruction as to on the basis of which calculation process a calculation is to be performed, and selects and executes a remaining amount calculation process based on the instruction. The system controller **108** gives an instruction specifying a remaining amount calculation process corresponding to the recording process which has been selected in the recording processing section **121**. The remaining amount calculation processes can be broadly classified into: remaining amount calculation processes based on the remaining capacity on the storage medium **112** and the transmission rate of program data; and remaining amount calculation processes based on the encoding rate. According to the present embodiment, the recording processing section **121** performs three types of remaining amount calculation processes. The specific description of each remaining amount calculation procedure will be provided later.

As information (management information) concerning each piece of recording data which is recorded on the storage medium **112,** the recording data detection section **119** detects a recording duration and a recording rate of each piece of recording data.

The data rate detector **120** detects the data rate of the incoming digital stream signal. As a detection method thereof, the data amount in a digital stream signal which is transmitted within a predetermined period may be measured, and a data rate may be detected. Alternatively, the data rate of the program may be acquired from the section data in an EIT (event information table) packet in the transport stream. The section data is transmitted as program information.

The recording processing section **121** includes a stream recording processing section **105**, a re-encode recording processing section **106,** and a self-encode recording processing section **107**. Via the processes in the stream recording processing section 105, the re-encode recording processing section **106,** and the self-encode recording processing section **107,** the recording processing section **121** outputs a video signal and an audio signal in the digital stream signal or analog television signal which has been selected by the signal selector **103**.

The stream recording processing section **105** records the digital stream signal of the input program data directly onto the storage medium **112,** without performing decoding or encoding.

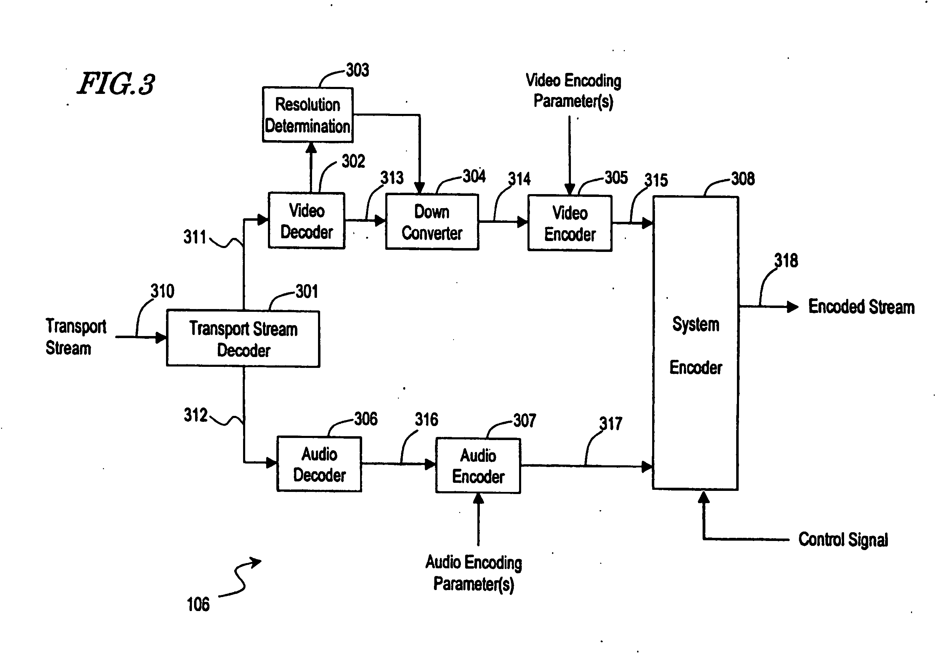

The re-encode recording processing section **106** once decodes the input digital stream signal, again encodes it with an encoding rate different from the original encoding rate to generate an encoded stream, and then records the encoded stream onto the storage medium **112**. A detailed description of the re-encode recording processing section **106** will be provided later with reference to **FIG. 3.**

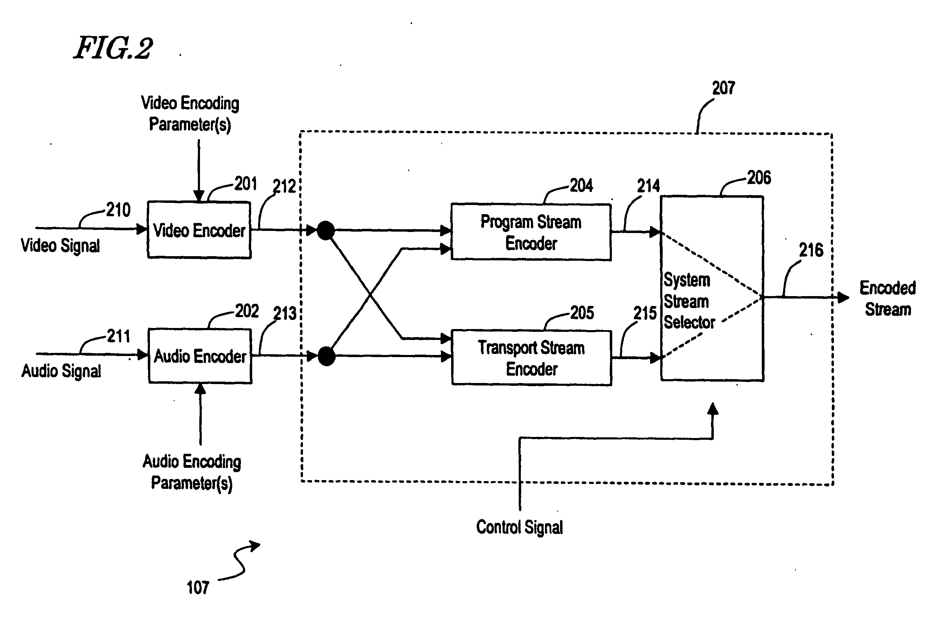

The self-encode recording processing section **107** subjects the program data which has been obtained from the input video signal and audio signal to an encoding process to generate an encoded stream, and records the encoded stream onto the storage medium **112**. This encoded stream is an MPEG program stream (PS) or an MPEG transport stream (TS). Hereinafter, recording of a program stream using the self-encode recording processing section **107,** will be referred to as a PS self-encode recording process, and recording of a transport stream will be referred to as a TS self-encode recording process. Although a single inputting path to the self-encode recording processing section **107** is illustrated in FIG. **1,** the video signal and the audio signal may be input via separate paths. A detailed description of the self-encode recording processing section **107** will be provided later with reference to FIG. **2.**

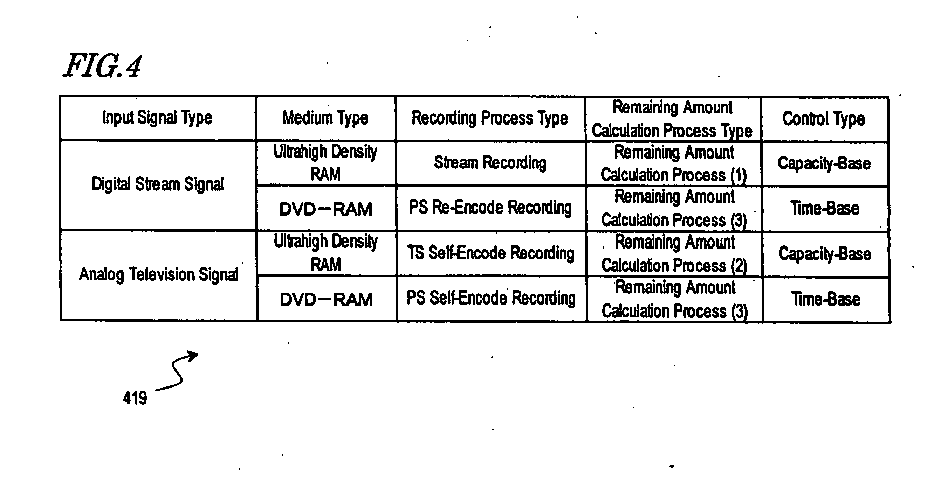

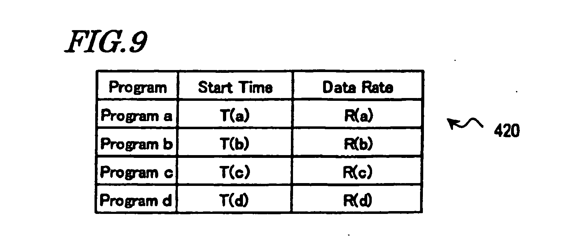

The table memory **122** stores a control table **419** and a program information table **420**. The control table **419** is a table (e.g., FIG. **4**) describing correspondence between the input signal, medium, recording process, and remaining amount calculation. The program information table **420** is information representing information specifying programs, transmission rates of signals containing program data, start times and end times of programs, and the like. Instead of end times, broadcasting durations of the programs may be described. In the case where the digital stream signal is a transport stream, for example, such information is stored in the section data in an EIT (event information table) packet which is transmitted as program information. As will be described later, for example, FIG. **9** shows an example of the program information table **420** in which information specifying programs, transmission rates of signals containing program data, and start times of programs are stored.

The videorecording mode setting section **123** is an interface for setting which one of videorecording duration, video image quality, and the like is to be given precedence when performing videorecording. The videorecording mode setting section **123** may be realized in a hardware-based or software-based manner, similarly to the channel setting section **109**. The "videorecording mode", as used hereinafter, is a notion which encompasses recording types, such as stream recording, self-encode recording, and re-encode recording; types of videorecording duration in self-encode recording or re-encode recording; and the like. The types of recording duration may be, for example: a long-time videorecording mode (encoding rate: 2.5 Mbps) which allows videorecording with a low image quality for a long time; a high image quality mode (encoding rate: 15 Mbps) which allows videorecording with a high image quality for a short time; and a standard-time videorecording mode (encoding rate: 5 Mbps) which is intermediary between them. In the present specification, the videorecording time modes will be represented as:

LP mode (encoding rate: 2.5 Mbps),
SP mode (encoding rate: 5.0 Mbps),
XP mode (encoding rate: 10 Mbps), and
B-XP mode (encoding rate: 15 Mbps).

Based on the above correspondence, an encoding rate or an encoding parameter is specified in terms of a videorecording time mode.

FIG. 2 shows an exemplary constitution of functional blocks in the self-encode recording processing section 107. The self-encode recording processing section 107 subjects the input video signal and audio signal to encoding, and outputs an encoded stream 216. The self-encode recording processing section 107 includes a video encoder 201, an audio encoder 202, and a system encoder 207.

The video encoder 201 subjects an incoming video signal 210 to an encoding in accordance with a predetermined video encoding parameter(s), and outputs a video stream 212. The video encoding parameter(s), which includes a bit rate, a video resolution, etc., representing an encoding compression rate, are supplied by the system controller 108. An MPEG2 video encoding scheme or the like may be used as the video encoding scheme, although this is not a limitation.

The audio encoder 202 subjects an input audio signal 211 to an encoding in accordance with an audio encoding parameter(s), and outputs an audio stream 213. The audio encoding parameter(s), which includes a bit rate, a sampling frequency, etc., representing the compression rate, are supplied by the system controller 108. The audio encoding scheme may be an MPEG1 audio layer 2 scheme or the like, although this is not a limitation. An uncompressed audio encoding, e.g., a PCM signal which is used for CD audio, may be output as the audio stream 213.

The system encoder 207 multiplexes the video stream 212 and the audio stream 213 to generate the encoded stream 216 for output. In the present embodiment, the system encoder 207 includes a transport stream encoder 205 for generating a TS and a PS encoder 204 for generating a PS through multiplexing. In FIG. 2, the system stream selector 206 selects either the MPEG program stream 214 or the MPEG transport stream 215 for output, in accordance with a control signal from the system controller 108.

Concerning whether to perform multiplexing as an MPEG program stream or perform multiplexing as an MPEG transport stream, the constitution shown in FIG. 2 is not the only possible constitution. For example, the system stream selector 206 may be omitted, and either one of the encoders 204 and 205 may operate in accordance with an instruction from the system controller 108. Furthermore, it is not necessary to comprise two types of hardware in the form of the encoders 204 and 205. Encode processes corresponding to the encoders 204 and 205 may be performed by switching the software to be executed in a single piece of hardware.

FIG. 3 shows an exemplary constitution of functional blocks in the re-encode recording processing section 106. The re-encode recording processing section 106 subjects an input encoded stream 310 to a decoding process, and thereafter again performs an encoding process using an encoding parameter(s) which is different from that which was initially used, to output the resultant encoded stream. The re-encode recording processing section 106 includes a transport stream (TS) decoder 301, a video decoder 302, a resolution determiner 303, a down converter 304, a video encoder 305, an audio decoder 306, an audio encoder 307, and a system encoder 308.

The TS decoder 301 analyzes the TS 310, which is an incoming encoded digital stream signal, and separates it into a video stream 311 and an audio stream 312.

The video decoder 302 subjects the video stream 311 to a decoding process, and outputs an decoded video 313. In the present embodiment, the decoding is performed in accordance with the MPEG2 video standard.

The resolution determiner 303 detects a video resolution of the video stream. For example, resolutions such as $1920 \times 1080 \times 29.97$, $1440 \times 1080 \times 29.97$, $1280 \times 720 \times 59.94$, $720 \times 480 \times 59.94$, and $720 \times 480 \times 29.97$ are detected, where horizontal sample number $\times$ vertical sample number $\times$ frame frequency. The detection of the resolution can be made by reading out the resolution information which is written in the management information of the video stream. In the case of MPEG video, resolution information is described in the sequence header.

The down converter 304 converts the resolution of the decoded video 313 to a predetermined resolution, and thus outputs a down-converted video 314. For example, a resolution of $1440 \times 1080 \times 29.97$ is converted to a resolution of $720 \times 480 \times 29.97$. This is realized by means of a low-pass filter process and a sampling process. In the case where the decoded video 313 has a resolution of $720 \times 480 \times 29.97$, changing of the resolution is not performed, and the decoded video 313 is output as it is.

The video encoder 305 subjects the video data 314 after conversion to an encoding process, and outputs a video stream 315. The encoding parameter(s) for the encoding process is supplied by the system controller 108. The encoding parameter(s) includes the encoding compression rate and the like, which should be different from that of the video stream 311 contained in the initial TS which has been input. Note that the encoding method may be an MPEG2 video encoding scheme, or any other scheme.

The audio decoder 306 subjects the audio stream 312 to a decoding process, and outputs the decoded audio data 316. In the present embodiment, the audio decoder 306 performs the decoding process in accordance with the AAC standard.

The audio encoder 307 subjects audio data 316 which has been decoded in accordance with the encoding parameter(s) supplied by the system controller 108 to an encoding process, and outputs an audio stream 317. As for the encoding method, an MPEG1 audio layer 2 scheme may be used to perform the encoding process, although this is not a limitation.

The system encoder 308 multiplexes the video stream 315 and the audio stream 317 to generate an encoded stream **318** for output. Similarly to the system encoder **207** illustrated in the self-encode recording section of FIG. **2,** the system encoder **308** selectively outputs either a TS or a PS. The selection is controlled by a control signal from the system controller **108.**

In the case where the input video and audio have identical encoding parameters, the re-encoding process of the video and audio may be omitted, and the MPEG transport stream may simply be converted to an MPEG program stream. In this case, the video stream **311** and the audio stream **312** may be input to the system encoder **308,** and subjected to a system encode process.

Similarly, in the case where only the video or only the audio is to be subjected to a re-encoding process, only the signal to be subjected to a re-encoding process may be decoded and encoded, whereas the stream which is not to be subjected to a re-encoding process may be directly input to the system encoder **308.**

Although it is assumed that the decoded signal which is obtained through a decoding process is again subjected to an encoding process in the re-encoding process, this is not a limitation. For example, only a part of the decoding process may be performed, and only the decoded part may be subjected again to an encoding process. Specifically, in an MPEG encoding scheme which uses a discrete cosine transform (DCT) encoding process, after obtaining a DCT coefficient(s) through a dequantization of symbols which have been variable-length decoded, an inverse DCT transform may be performed to obtain a decoded video signal. Moreover, in the encoding process, a video stream is obtained by performing a quantization process and a variable-length encoding process for the DCT coefficient(s) having been obtained through a DCT transform process. However, the video decoder **302** may perform the process only up to the restoration of a DCT coefficient(s). In this case, to obtain the video stream **315,** the video encoder **305** performs a quantization process and a variable-length encoding process for the decoded DCT coefficient(s) in accordance with the encoding parameter(s). With such a constitution, it is possible to omit the inverse DCT transform process by the video decoder **302** and the DCT transform process by the video encoder **305.**

As in an MPEG encoding scheme, in the case where a motion-compensated prediction encoding is performed, a re-encoding process may be performed by utilizing a motion vector which is contained in the incoming video stream. By doing so, it becomes possible to omit the motion vector detection process in the video encoder **305.**

Note that the constituent elements for encoding processes (which in the present embodiment are: the video encoder **201,** the audio encoder **202** and the system encoder **207,** as well as the video encoder **305,** the audio encoder **307**, and the system encoder **308**) may be shared between the self-encode recording processing section **107** and the re-encode recording processing section **106.**

Hereinafter, in the re-encode recording processing section **106,** recording of a PS will be referred to as a PS re-encode recording process, and recording of a TS will be referred to as a TS re-encode recording process.

Next, the recording processes in the recording processing section **121** will be described in detail. The recording processing section **121** performs a recording process which is selected through the selection operation by the process selector **104.** The selection of a recording process is made based on the type of the input signal, and the type of the storage medium **112.** Hereinafter, the signal recording processes in the cases where a digital stream signal and an analog television signal are input will be described. Note that the relationship between the selection process and recording process in connection with the following descriptions is as described in the control table **419** in the table memory **122.** FIG. **4** shows an example of the control table **419.** In the control table **419,** a correspondence between input signals, media, recording processes, and remaining amount calculations is described. The system controller **108** may give instructions to the respective constituent elements in accordance with the control table **419,** or may output instructions for realizing the below-described processes without providing such a table.

[recording of a digital stream signal]

While a channel for a BS digital broadcast is being set via the channel setting section **109,** a digital stream signal is input to the data processing apparatus **10.**

When the storage medium **112** is loaded to the data processing apparatus **10** and the storage medium **112** is determined to be a DVD-RAM medium by the medium determination section **111,** the system controller **108** controls the process selector **104** so that the signal is routed to be transmitted to the re-encode recording processing section **106.** The re-encode recording processing section **106** converts the TS which is transmitted via BS digital broadcast to a PS, and records it onto the DVD-RAM medium. This PS is recorded, for example, in a format which complies with the DVD video-recording standard. In the case where the input video signal is a Hi-Vision signal, the re-encode recording processing section **106** down-converts the signal to a standard television resolution ($720 \times 480 \times 29.97$) and records the converted signal.

Next, if the storage medium **112** is determined to be an ultrahigh density RAM medium by the medium determination section **111,** the system controller **108** controls the process selector **104** so that the signal is routed to be transmitted to the stream recording processing section **105.** Thus, the input TS is directly recorded onto the ultrahigh density RAM medium, without being decoded or encoded. Since no re-encode process is performed, no new encoding noise occurs. Therefore, data which is faithful to the input can be recorded. In the case where the TS contains a plurality of programs, the data of a particular program can be extracted by utilizing the packet ID which is assigned to each packet in the TS, and recorded. Since this process involves neither decoding nor encoding, it can also be regarded as a stream recording process.

[recording of an analog television signal]

Next, while a channel for receiving an analog terrestrial is being selected by the channel switching user interface **109,** an analog television signal is input to the data processing apparatus **10.**

Once the storage medium **112** is loaded to the data processing apparatus **10,** the system controller **108** controls the process selector **104** so that the signal is routed to be transmitted to the self-encode recording processing section **107,** irrespective of the type of storage medium which is recognized by the medium determination section **111.** However, if the storage medium **112** is a DVD-RAM medium, the system controller **108** causes the system encoder **207** to output a PS of a format complying with the DVD video-recording standard. On the other hand, if the storage medium **112** is an ultrahigh density RAM medium, the system encoder **207** causes a TS to be output.

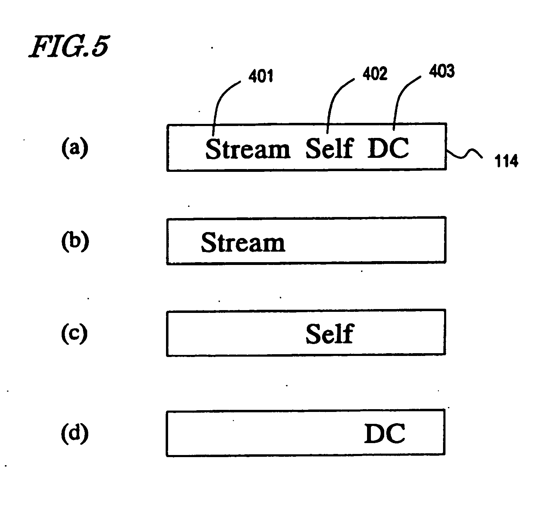

In the above process, the display section **114** of the data processing apparatus **10** may activate a text character or the like representing the recording process which is under execution, thus indicating the type of recording process under execution to the user. FIG. **5(a)** shows examples of text characters which can be displayed on the display section **114.** The display section **114** is capable of displaying three kinds of text characters; that is, a "Stream" indication **401,** a "Self" indication **402,** and a "DC" indication **403.**

FIG. **5(b)** indicates that a recording process is performed by the stream recording processing section **105.** In the case of the above example, when a channel for a BS digital broadcast is set and a signal recording for an ultrahigh density medium is performed, only the "Stream" indication 401 is activated. FIG. **5(o)** indicates that a recording process is performed by the self-encode recording processing section **107.** In the case of the above example, when a channel for a terrestrial analog broadcast is set, only the "Self" indication **402** is activated. This does not depend on the type of storage medium. FIG. **5(d)** indicates that a recording process is performed by the re-encode recording processing section **106.** In the case of the above example, when a channel for a BS digital broadcast is set and signal recording for a DVD-RAM medium is performed, "DC" **403** is activated. By displaying a videorecording mode on the display section **114** as shown in FIGS. 5(b) to (d), the user is allowed to recognize the recording process which is being selected.

Once the input signal and the storage medium are determined, and a recording process is determined through the aforementioned procedure, then, the remaining amount calculation section **115** calculates a remaining capacity or remaining duration for which it is possible to perform recording on the storage medium **112.** In the present specification, the remaining capacity or remaining duration will be referred to as a "remaining amount", and the calculation for obtaining a remaining amount will be referred to as a "remaining amount calculation".

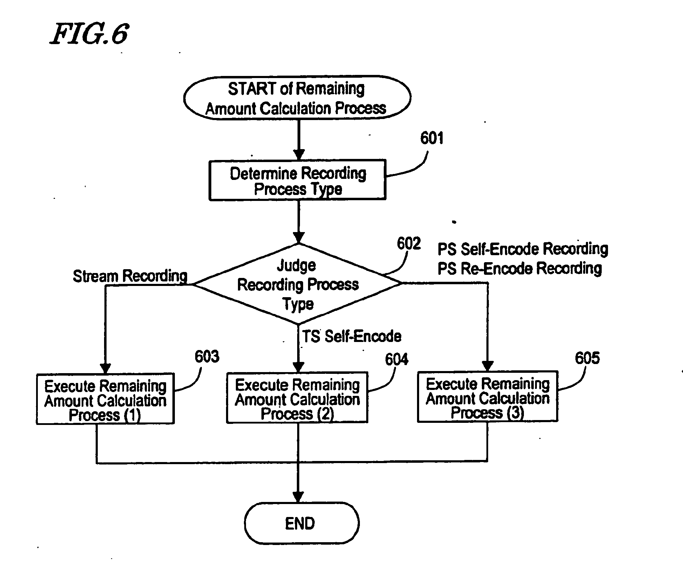

FIG. **6** shows the procedure of a remaining amount calculation process. In the present embodiment, the system controller **108** selects one of remaining amount calculation processes (1), (2), and (3) in accordance with the type of recording process, and the remaining amount calculation section **115** calculates the remaining amount in accordance with the selection.

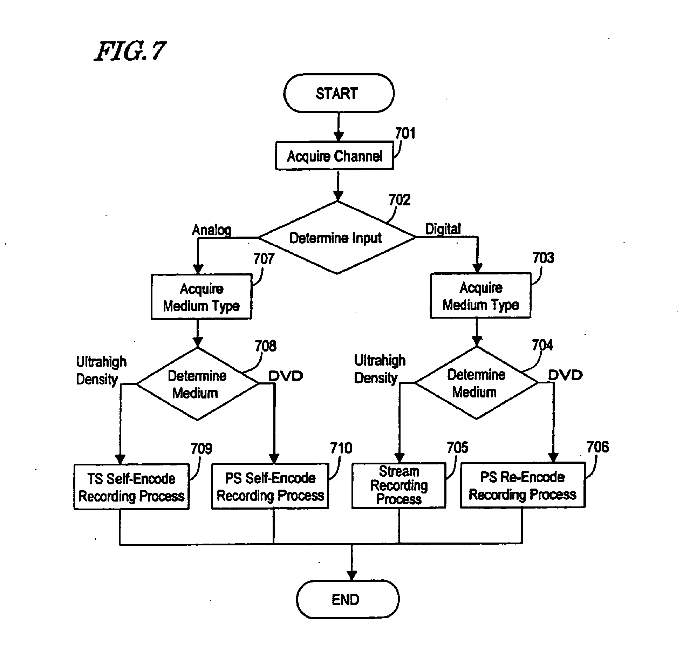

When the process is begun, the type of the recording process is first determined at step **601.** The types of recording processes are the respective processes of: stream recording; PS self-encode recording; and PS re-encode recording. The specific details of this process will be described later with reference to FIG. 7. At step **602,** the system controller **108** judges which recording process is to be performed. In the case where a stream recording process is performed, the process proceeds to step **603,** where the remaining amount calculation process (1) is executed. In the case where a TS self-encode recording process is to be performed, the process proceeds to **604,** where the remaining amount calculation process (2) is executed. In the case where a PS self-encode recording process or a PS re-encode recording process is to be performed, the process proceeds to step **605,** where the remaining amount calculation process (3) is executed.

The remaining amount calculation processes (1) and (2) realize calculation and management of the remaining amount based on the remaining capacity of the storage medium **112.** On the other hand, the remaining amount calculation process (3) realizes calculation and management of the remaining amount based on the recording duration of the data. Hereinafter, a remaining amount management based on capacity will be referred to as a "capacity-base remaining amount management", whereas a remaining amount management based on time will be referred to as a "time-base remaining amount management". The specific processes of the processes (1) to (3) will be described later in detail.

The reason why the remaining amount calculation process (3) through time-base remaining amount management is selected when performing a PS self-encode recording or a PS re-encode recording is that, in either case, an encoding process is performed at the data processing apparatus **10** side, so that it is possible to adjust the encoding rate, and, after a data erasure, recording can be guaranteed for a duration corresponding to the erased data. On the other hand, in the case of performing a stream recording or a TS self-encode recording, a capacity-base remaining amount management is performed. In these cases, recording is performed in the TS format, but stream recording and TS self-encode recording are both present. Therefore, a capacity-base remaining amount management is performed to ensure efficient utilization of capacity at the time of stream recording.

Thus, by determining the remaining amount calculation process in accordance with the recording process, an appropriate and accurate remaining amount calculation can be realized in connection with each recording process. As will be described later, this allows the capacity of the storage medium **112** to be efficiently utilized, thus realizing a remaining amount management which is easy for the user to understand.

Now, referring to FIG. **7,** a recording process determining procedure which is performed at step **601** of FIG. **6** will be described. FIG. **7** shows a recording process determining procedure. First, at step **701,** the system controller **108** acquires the information of a channel which has been set by the user. At step **702,** the signal selector **103** determines the type of the input signal. If the input signal is a digital stream signal, the process proceeds to step **703**. If the input signal is an analog television signal, the process proceeds to step **707.**

At step **703,** the system controller **108** acquires the type of the storage medium **112** which is loaded (as determined by the medium determination section **111**) and determines this type at step **704.** In the case of a DVD-RAM medium, the process proceeds to step **706.** In the case of an ultrahigh density RAM medium, the process proceeds to step **705.** At step **705,** it is determined that a stream recording process is to be performed. Thereafter, the system controller **108** issues an instruction to the process selector **104** to cause the process selector **104** to select the stream recording processing section **105,** whereby the input digital stream signal is stream-recorded onto the ultrahigh density medium. On the other hand, at step **706,** it is determined that a re-encode recording process is to be performed. The system controller **108** issues an instruction to the process selector **104** to cause the process selector **104** to select the re-encode recording processing section **106,** whereby the input digital stream signal is decoded, re-encoded into a PS, and then recorded onto the DVD-RAM medium.

At step **707** and step **708,** the same processes as those of steps **703** and **704** described above are performed to determine the type of the storage medium **112** which is loaded. In the case of a DVD-RAM medium, the process proceeds to step **710.** In the case of an ultrahigh density RAM medium, the process proceeds to step **709.** At step **709,** it is determined that a self-encode recording process into a TS is to be performed. Thereafter, the system controller **108** issues an instruction to the process selector **104** to cause the process selector **104** to select the self-encode recording processing section **107,** whereby the input analog television signal is subjected to an encoding process so as to be converted into a TS, and recorded onto the ultrahigh density medium. At step **710,** it is determined that a self-encode recording process into a PS is to be performed. The system controller **108** issues an instruction to the process selector **104** to cause the process selector **104** to select the self-encode recording processing section **107,** whereby the input analog television signal is subjected to an encoding process so as to be converted into a PS, and recorded onto the DVD-RAM medium.

According to the process described above, by merely setting a channel, the user can allow a recording process to be automatically selected without being aware of the type of input signal and the type of storage medium, whereby an optimum recording process is performed.

Next, the remaining amount calculation process (1) to be performed at step **603** of FIG. **6** will be described. In the present embodiment, three kinds of examples in which the remaining amount calculation process (1) is applicable will be illustrated. Hereinafter, these instances will be represented as remaining amount calculation processes (1a), (1b), and (1c).

Remaining amount calculation process (1a):

In the remaining amount calculation process (1a), a data rate Rs of the digital stream signal **101** is detected by the data rate detector **120,** and the remaining amount calculation section **115** calculates a remaining duration TR1 from the detected data rate Rs and the remaining capacity CR, as in the following equation.

$$\textbf{(eq. 1)}\ \ \textbf{TR1=CR/Rs}$$

Remaining amount calculation process (1b):

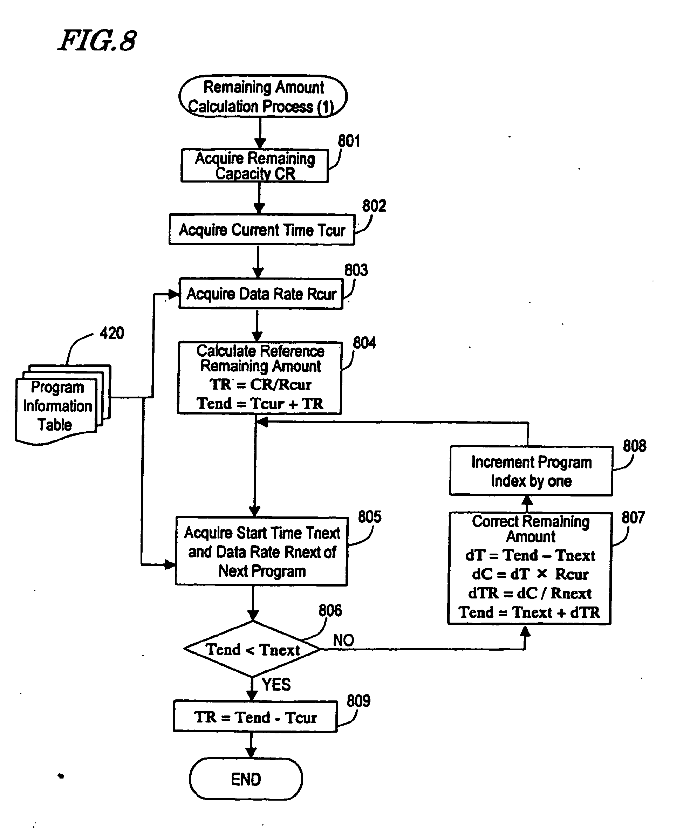

In the remaining amount calculation process (1b), the remaining amount calculation section **115** calculates a remaining amount by acquiring, together with the program information which is currently being transmitted, the program information of any program to be subsequently transmitted. FIG. **8** shows the calculation procedure of the remaining amount calculation process (1b). At step **801,** the remaining amount calculation section **115** acquires the remaining capacity CR as detected by the remaining capacity detection section **113.** At step **802,** the remaining amount calculation section **115** acquires the current time Tcur. The current time Tcur can be acquired from a clock which is provided in the recording apparatus, or from a time information packet (TOT) within the TS. At step **803,** the remaining amount calculation section **115** acquires the data rate Rcur of the program which is currently being received.

The data rate Rcur is acquired from the information which is stored in the program information table **420.** FIG. **9** shows an example of program information which is stored in the program information table **420.** Herein, start times and data rates of program **a**, program **b**, program **c**, and program **d** are stored, the start times being denoted as T(a), T(b), T(c), and T(d), respectively, and the data rates being denoted as R(a), R(b), R(c), and R(d), respectively. Program **a** is the program which is currently being received. Programs **b** to **d** denote programs to be subsequently transmitted. The data rates are specified in terms of whether the signal of the program is a standard resolution (SD) signal or a high resolution (HD) signal, or the like. If it is determined that program **a** is transmitted via an SD signal, for example, the system controller **108** generates program information whose R(a) is set at 12 Mbps. If it is determined that program **a** is transmitted via an HD signal, the system controller **108** generates program information whose R(a) is set at 24 Mbps.
Referring back to FIG. **8,** at step **804,** a reference remaining duration TR is calculated by using the data rate Rcur and the remaining capacity CR, as in the following equation.

$$\textbf{(eq. 2) TR=CR/Rcur}$$

Next, a reference final scheduled time Tend at which the remaining capacity will reach zero is determined.

$$\textbf{(eq. 3) Tend=Tcur+TR}$$

The reference remaining duration TR and the reference final scheduled time Tend are the remaining duration and the scheduled time at which the remaining amount will reach zero, respectively, under the assumption that the input will keep coming at the data rate Rcur. At the next step **805,** the remaining amount calculation section **115** acquires a start time Tnext and a data rate Rnext of a next program, based on the program information table memory **420.** At step **806,** the remaining amount calculation section **115** compares the final scheduled time Tend against the start time Tnext of the next program to judge which one of them is greater. This is a judgment as to whether the next program can be recorded or not. In the case where the next program is to be started by the final scheduled time Tend (in the case where Tend ≧ Tnext), it is judged that the next program can be recorded and the process proceeds to step **807.** Otherwise, the process proceeds to step **409.** At step **807,** the remaining duration is corrected. First, according to the following equation, the remaining amount calculation section **115** determines a duration dT from a time Tnext at which the next program is started until the final scheduled time Tend.

$$\textbf{(eq. 4) dT=Tend-Tnext}$$

Next, assuming that the input keeps coming at the data rate of Rcur, a data amount dC which will be incurred in the duration dT will be determined according to the equation.

$$\textbf{(eq. 5) dC=dT×Rcur}$$

The data amount dC represents a capacity which is allotted to the recording of the next program. Then, according to the following equation, the remaining amount calculation section **115** determines a duration dTR for which the next program can be recorded. In this case, the data amount is dC, and the data rate of the next program is Rnext.

$$\textbf{(eq. 6) dTR=dC/Rnext}$$

Next, the remaining amount calculation section **115** again calculates a final scheduled time Tend. Since the next program will be started at the time Tnext, and the recording of the next program is possible for the duration dTR, the final scheduled time Tend can be determined from the following equation.

$$\textbf{(eq. 7) Tend=Tnext+dTR}$$

At step **808,** the remaining amount calculation section **115** increments the index of the program by one, and returns to step **805.** In other words, the processes of steps **805** and **806** are repeated again with respect to a still next program. At step **809,** the remaining amount calculation section **115** determines the remaining duration TR by using the updated time Tend.

$$\textbf{(eq. 8) TR=Tend-Tcur}$$

In the remaining amount calculation process (1), the remaining duration TR can be determined through the above-described procedure.

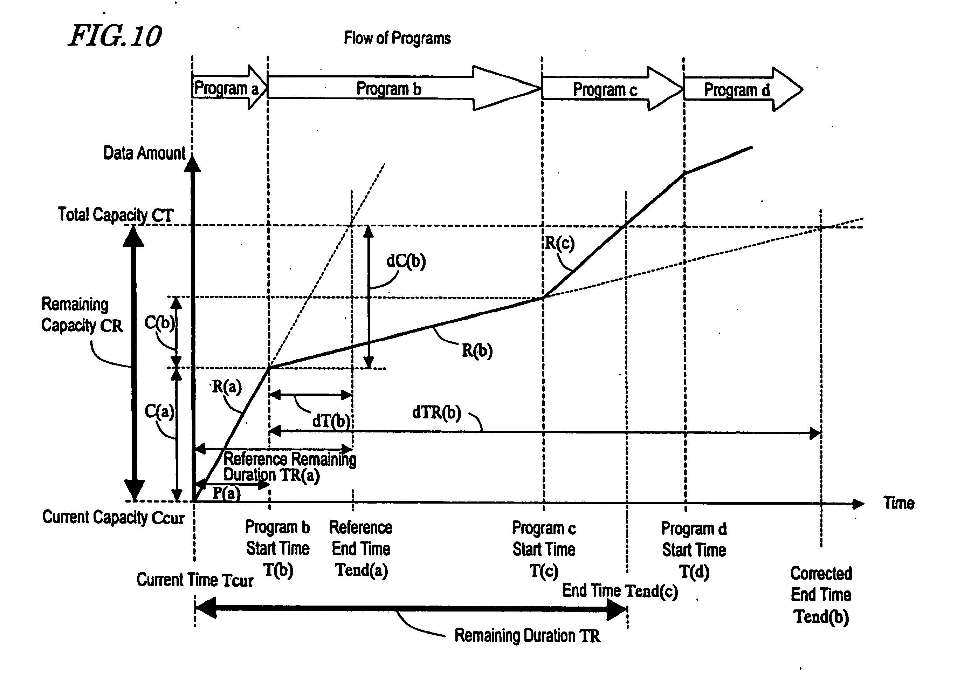

Next, with reference to FIG. **10,** a more specific description will be given. FIG. **10** shows a relationship between times of recording of programs and data amount to be recorded. In FIG. **10,** time is taken on the horizontal axis and data amount is taken on the vertical axis, and the origin represents a current time Tcur and a capacity Ccur which is currently being used. The storage medium is shown to have a total capacity of **CT,** and a remaining capacity of **CR**(=CT-Ccur). As a flow of programs, it is illustrated that program **a** is currently being broadcast, and subsequently program **b,** program **c,** and program **d** are to be broadcast. The program information of each program is described in the program information table memory **420** shown in FIG. **9.**

First, the temporal transition of data amount when recording the program **a**, which is currently being input, is represented by a line having a gradient which is equal to a data rate **R(a).** The time at which this line reaches the total capacity **CT** is the end time **Tend(a).**

In this example, program **b** is started from **T(b),** which is a time before reaching **Tend(a).** Therefore, the data amount transitions in such a manner that it increases with the gradient **R(a)** up to time **T(b),** but with a gradient **R(b)** from time **T(b)** on. Herein, **C(a)** is a data amount which is expected when program **a** is recorded, and the data amount **dC(b)** is the remaining capacity which is scheduled at the start time **T(b)** of program **b.**

A scheduled end time is determined also with respect to program **b,** similarly to program **a.** Specifically, assuming that the data amount transitions along a line with the gradient **R(b)** from the program **b** start time **T(b),** a scheduled end time **Tend(b)** at which the total capacity **CT** will be reached is determined.

In FIG. 8, program o is started before reaching the scheduled end time **Tend(b).** In this case, at step **806** of FIG. 8, scheduled end time **Tend(b)** $\geqq$ Tnext. As for program o, the data amount transitions with a gradient **R(o)** from time **T(o),** until reaching the total capacity **CT** at the scheduled end time **Tend(o).** Since the scheduled end time **Tend(o)** falls before a start time **T(d)** of the next incoming program d, **Ten4(o)** is the scheduled end time Tend. Consequently, the duration from the current time Tcur to Tend is the remaining duration TR to be determined.

The remaining duration TR which has thus been determined is regarded as the remaining duration TR1 in the remaining amount calculation process (1b). In the above-described calculation process, the remaining duration is determined by using not only the program information (data rate and program start time) of the program which is currently being input, but also the data rates and program start times of the programs to be input in future, and therefore an accurate calculation is possible. By displaying the calculated duration on the display section **114**, the user's convenience is improved.

Although a case has been illustrated where a data rate is acquired as program information, the remaining duration may be calculated by acquiring the data amount of each program. In this case, the broadcasting duration of the program may be determined from a difference between the start time and the end time, and a data rate can be calculated by dividing the data amount by this program duration.

Remaining amount calculation process (1c):

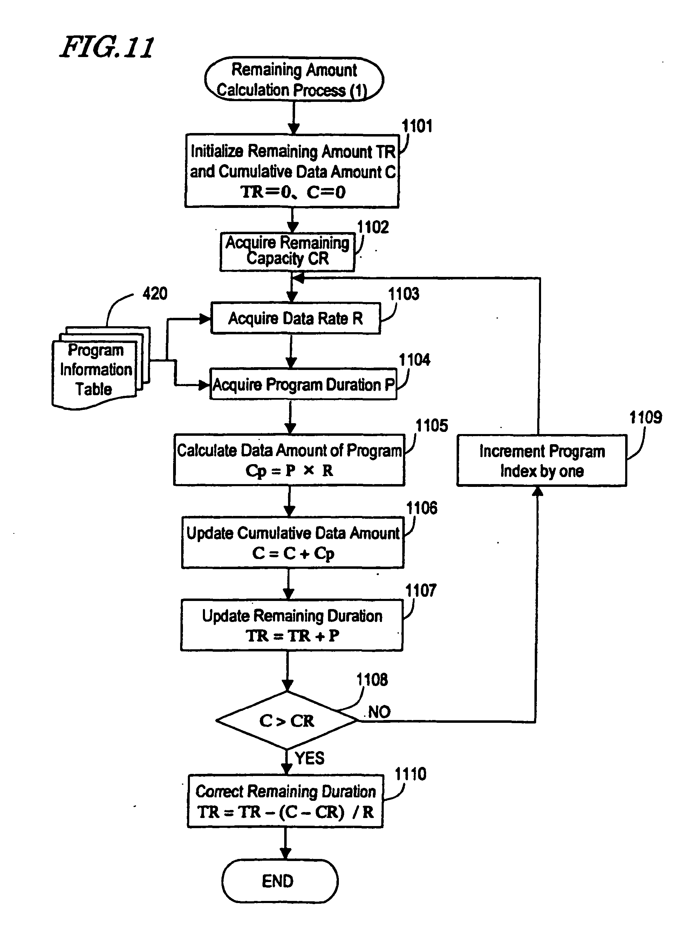

In the remaining amount calculation process (1c), the remaining amount calculation section **115** calculates the remaining amount while cumulatively adding the data amounts of incoming programs and judging whether the total capacity is reached or not. FIG. **11** shows the calculation procedure of the remaining amount calculation process (1c). At step **1101,** the remaining amount calculation section **115** initializes the remaining duration TR and the cumulative data amount C (TR=0, C=0). At step **1102**, the remaining amount calculation section **115** acquires the remaining capacity CR which has been detected by the remaining capacity detection section **113**. At step **1103**, the remaining amount calculation section **115** acquires a data rate R from the program information table **420**. At step **1104,** a program duration P is acquired. The program duration P may be calculated from the program start time and the program end time. However, in the case where the program duration is transmitted as program information, the program duration P may be detected by reading out the transmitted information. Each program duration may be stored in the program information table **420.**

At step **1105**, a data amount Cp of the program is calculated from the program duration P and the data rate R.

$$\text{(eq. 9)} \quad Cp = P \times R$$

At step **1106,** the remaining amount calculation section **115** updates the cumulative data amount C according to the following equation.

$$\text{(eq. 10)} \quad C = C + Cp$$

At step **1107**, the remaining amount calculation section **115** updates the remaining duration TR according to the following equation.

$$\text{(eq. 11)} \quad TR = TR + P$$

The above two equations mean that a calculation result of the right-hand side is adopted as a value of the variable on the left-hand side.
At step **1108**, the remaining amount calculation section **115** compares the remaining capacity CR against the cumulative data amount C to judge which one of them is greater. This is a judgment as to whether the next program can be recorded or not. In the case where the cumulative data amount C has not reached the remaining capacity CR, the remaining amount calculation section **115** judges that the next program can be recorded, and the process proceeds to step **1109;** otherwise, the process proceeds to step **1110**. At step **1109,** the program index is incremented by one, and the process returns to step **1103**. In other words, the processes from steps **1103** to **1108** are repeated again with respect to a still next program. At step **1110,** the remaining amount calculation section **115** corrects the remaining duration TR, and finalizes the remaining duration TR.

$$\text{(eq. 12)} \quad TR = TR - (C - CR)/R$$

On the right-hand side of the above equation, a duration (=(C-CR)/R) corresponding to the capacity (=C-CR) exceeding the remaining capacity CR is subtracted from the remaining duration TR as updated at step **507**. The result of the subtraction is used as a new, corrected TR value.
According to the above calculation process, the remaining duration can be calculated as accurately as in the remaining amount calculation process (1b). By displaying the calculated duration on the display section **114,** the user's convenience is improved.
In the remaining amount calculation process (1c), too, the remaining duration may be calculated by acquiring the data amount of each program as program information. Referring back to FIG. **10,** the remaining amount calculation process (1c) will be described more specifically. First, the program duration P(a) of program a is determined in the following manner, as a duration from the current time Tcur until the end time of program **a.** Note that the end time of program **a** is equal to the start time T(b) of program **b.**

$$(eq. 13) \ P(a)=T(b)-Tcur$$

Assuring that the remaining duration TR is the program duration P(a),

$$(eq. 14) \ TR=P(a).$$

By using the data rate R(a), the data amount C(a) when recording program **a** can be expressed as:

$$(eq. 15) \ C(a)=P(a) \times R(a).$$

The cumulative data amount C which is expected after recording the program **a** is:

$$(eq. 16) \ C=C(a).$$

In FIG. **10,** since the total recording data amount of program a is less than the remaining capacity CR (C(a) <CR), it is determined whether the next program **b** can be recorded or not. By using the program duration P(b) and data rate R(b) of program **b**, the remaining duration TR is updated, and the data amount C(b) and cumulative data amount C of program **b** are determined.

$$(eq. 17) \ P(b)=start \ time \ T(c) \ of \ program \ c \ - \ start \ time \ T(b)$$

$$of \ program \ b$$

$$(eq. 18) \ TR=TR+P(b)=P(a)+P(b)$$

$$(eq. 19) \ C(b)=P(b) \times R(b)$$

$$(eq. 20) \ C=C+C(b)=C(a)+C(b)$$

In FIG. **10**, since the cumulative data amount C is still less than the remaining capacity CR (C(a)+C(b)<CR), it is determined whether the next program c can be recorded or not.

$$(eq. 21) \ P(c)= start \ time \ T(d) \ of \ program \ d \ - \ start \ time \ T(c)$$

$$of \ program \ c$$

$$\text{(eq. 22)} \quad R=TR+P(c)=P(a)+P(b)+P(c)$$

$$\text{(eq. 23)} \quad C(c)=P(c) \times R(c)$$

$$\text{(eq. 24)} \quad C=C+C(c)=C(a)+C(b)+C(c)$$

As shown in FIG. **10,** the cumulative data amount C exceeds the remaining capacity CR during the recording of program o. Therefore, the data processing apparatus 10 determines that a part of program o can be recorded.

Next, the remaining amount calculation section **115** performs a correction of the remaining duration TR with respect to the amount exceeding the remaining capacity CR, thus finalizing the remaining duration.

$$\text{(eq. 25)} \quad TR=TR-(C-CR)/R(c)$$

$$=P(a)+P(b)+P(c)-(C-CR)/R(c)$$

The above equation may be modified to give:

$$\text{(eq. 26)} \quad TR=P(a)+P(b)$$

$$+(CR-C(a)-C(b))/R(c).$$

Although an example has been illustrated where the end time of each program coincides with the start time of each next program, this is not a limitation. For example, the system controller **108** may acquire both of the program start time and the program end time from the program information.

The remaining duration TR which has thus been determined is regarded as the remaining duration TR1 in the remaining amount calculation method (1). The remaining amount calculation section **115** determiners the remaining duration TR1 by using the updated time Tend.

In the present embodiment, three examples (1a) to (1c) have been described with reference to the remaining amount calculation method (1). Among these, the remaining amount calculation section **115** of the data processing apparatus **10** may have a function of calculating the remaining duration by, for example, the remaining amount calculation method (1b).

Next, the remaining amount calculation process (2) to be performed at step **604** of FIG. 6 will be described. In the present embodiment, two kinds of examples in which the remaining amount calculation process (2) is applicable will be illustrated. Hereinafter, these instances will be represented as remaining amount calculation processes (2a) and (2b).

Remaining amount calculation process (2a):

In the remaining amount calculation process (2a), by utilizing the encoding rate Re and remaining capacity CR which are utilized in the encoding processes of the re-encode recording process **106** and the self-encode recording process, the remaining amount calculation section **115** calculates the remaining duration TR2 according to the following equation.

$$\text{(eq. 27)} \quad TR2=CR/Re$$

The encoding rate Re is determined from the videorecording time mode. For example, the encoding rate Re is 2.5 Mbps under the long-time videorecording mode (LP mode), and is 5 Mbps under the standard-time videorecording mode (SP mode).

Remaining amount calculation process (2b):

The remaining amount calculation process (2b) is a calculation process which is available when the encoding process is a variable bit rate (VBR)encoding process.

In general, in VBR encoding, the encoding rate is increased or decreased relative to a target average encoding rate, while taking into consideration how complicated the input signal is, thus realizing a high image quality and a high sound quality. Therefore, the actual encoding rate does not necessarily coincide with the average encoding rate which has been set as a target. Accordingly, a VBR margin M is defined, such that the encoding rate is varied within the VBR margin M. Specifically, the rate is controlled so that an error data amount D occurring due to a difference between the average encoding rate Rea and the actually-occurring data rate Rg does not exceed the VBR margin M. As a result, the data amount G incurred in the recording duration Tr never exceeds a maximum data amount Gmax which is determined by the following equation.

$$(eq.\ 28)\ Gmax = Rea \times Tr + M$$

In other words, recording of the program data is guaranteed for a remaining duration TRvbr, determined by dividing by the average encoding rate Rea a capacity which is obtained by subtracting the VBR margin M from the remaining capacity CR.

$$(eq.\ 29)\ TRvbr = (CR - M)/Rea$$

By replacing the average encoding rate Rea with the encoding rate Re, the remaining amount calculation section **115** determines the remaining duration TR2 as follows.

$$(eq.\ 30)\ TR2 = (CR - M)/Re$$

As a rate controlling method which abides by the VBR margin M, a quantization parameter in the encoding process may be controlled. As the quantization parameter is increased, the data amount is reduced, whereas as the quantization parameter is decreased, the data amount is increased. Therefore, a feedback control as follows may be performed, for example.

$$(eq.\ 31)\ Q = Qst \times M/(M - F \times D)$$

Herein, Qst is a predetermined initial quantization parameter; and F is a positive significant number of one or less, which is a predetermined value determined by the intensity of feedback.

In the present embodiment, two examples (2a) and (2b) have been described with reference to the remaining amount calculation method (2). Among these, the remaining amount calculation section **115** of the data processing apparatus **10** may have a function of calculating the remaining duration by, for example, the remaining amount calculation method (2b).

Next, the remaining amount calculation process (3) to be performed at step **605** of FIG. **6** will be described. In the present embodiment, two kinds of examples in which the remaining amount calculation process (3) is applicable will be illustrated. Hereinafter, these instances will be represented as remaining amount calculation processes (3a) and (3b).

Remaining amount calculation process (3a):

In the remaining amount calculation process (3a), the remaining amount calculation section **115** calculates a remaining duration TR3 based on the recording duration Tr, recording rate Rr, and encoding rate Re of each piece of recording data. Hereinafter, the recording duration of an $i^{th}$ piece of recording data will be denoted as Tr (i), and the recording rate as Rr (i), and so forth. By defining Rrs as the reference recording rate, the remaining amount calculation section **115** calculates a reference recording duration Trs (i) by normalizing each recording duration.

$$\text{(eq. 32) Trs(i)=Tr(i)×Rr(i)/Rrs}$$

The sum total of the reference recording durations Trs(i) will be denoted as Trs. By using such normalized recording durations, it becomes possible to calculate recording durations, which are independent of the recording rate, to serve as references.

$$\text{(eq. 33) Trs=Sum[Trs(i)]}$$

(Sum[] : indicates addition in connection with total recording data)

Now, there is introduced a duration (reference total recording duration) Tas for which recording is possible, and which is determined based on the total capacity of the storage medium. For example, in the case of a 4.7GB capacity (e.g., a DVD), the reference recording rate Rs may be 5 Mbps, and the reference total recording duration Tas may be 2 hours. The reference recording duration may also be regarded as a maximum duration for which it is possible to record program data on an unused storage medium 112 according to a previously determined recording rate.

By using the reference total recording duration Tas, the remaining amount calculation section **115** determines the reference remaining duration TRs in the following manner.

$$\text{(eq. 34) TRs=Tas-Trs}$$

Next, according to the following equation, the remaining amount calculation section **115** calculates the remaining duration TR3 based on the encoding rate Re which is determined by the videorecording time mode.

$$\text{TR3=TRs×Rrs/Re}$$

For example, assuming that two pieces of recording data have been recorded, and assuming that Tas=2 hours; Tr(1)=1 hour; Tr(2)=1 hour; Rrs=5 Mbps; Rr(1)=2.5 Mbps; Rr(2)=5 Mbps; and Re=2.5 Mbps, it follows that:

$$\text{Trs(1)=1×2.5/5=0.5 hours;}$$

$$\text{Trs(2)=1×5/5 =1 hour;}$$

$$\text{Trs=1.5 hours;}$$

$$\text{TRs=2-1.5=0.5 hours;}$$

and

$$TR3=0.5\times5/2.5=1\ hour.$$

Note that the recording duration Tr and recording rate Rr of each piece of recording data are detected by the recording data detection section 119. The encoding rate Re is determined based on the videorecording time mode.

Remaining amount calculation process (3b):

In the remaining amount calculation process (3b), between a remaining duration TR3c which is determined from the remaining capacity and a remaining duration TR3t which is determined through the same procedure as that of the above-described remaining amount calculation method (3a), the remaining amount calculation section **115** may determine whichever one is smaller as the remaining duration TR3.

$$(eq.\ 35)\ TR3c=CR/Re$$

$$(eq.\ 36)\ TR3t=TRs\times Rrs/Re$$

$$(eq.\ 37)\ When\ TR3c<TR3t,\ TR3=TR3c$$

When TR3c$\geqq$TR3t, TR3=TR3t

This is because, due to scratches or the like applied to the storage medium, defects may occur so as to hinder recording up to the intrinsic total capacity of the storage medium. Thus, since it is no longer possible to perform recording for a duration corresponding to the total recording duration Tas as defined based on the intrinsic total capacity, the remaining amount calculation section **115** determines the remaining duration TR3c which is determined from the remaining capacity to be the remaining duration.

Moreover, in the case where VBR encoding is performed similarly to the remaining amount calculation process (2b), the remaining duration TR3c may be determined in the following manner.

$$(eq.\ 38)\ TR3c=(CR-M)/Re$$

Incidentally, when a VBR encoding is performed, the actually-occurring data rate may become smaller than the target encoding rate. In this case, extra capacity may still be left after performing a recording for the remaining duration as calculated prior to the recording. However, if recording were to be continued until the remaining capacity is depleted, recording for the erased duration could not be guaranteed. Recording for the erased duration being guaranteed means it is guaranteed that a recording can be performed for the same duration as the duration of the erased recording data. For example, in the case where a recording was performed in a given videorecording time mode under the condition that the remaining duration was 1 hour, it may so happen that, because the actually-occurring rate was low, recording was actually possible for 1 hour and 30 minutes by continuing the recording until the remaining capacity was depleted. However, when later this piece of recording data is erased and a record is performed in the same videorecording time mode, a recording of only a 1 hour-worth of program can be guaranteed. This is because it is possible that the actually-occurring rate may increase during the VBR encoding. The reason why recording is guaranteed for the remaining duration is that a variable bit rate control is performed based on the aforementioned VBR margin **M**. Moreover, a rate control may be performed so as to bring the remaining capacity when the remaining duration has reached zero close to zero, thus minimizing waste of capacity. In other words, the system controller **108** and the like in the data processing apparatus **10** may control the actually-occurring rate through e.g. a feedback control of the quantization parameter in the encoding process by utilizing a difference between the actually-occurring rate and the target encoding rate.

The time-base remaining amount management illustrated in the remaining amount calculation methods (3a) and (3b), where a total recording duration is defined, realizes a guaranteed recording for the erased duration. As a result, there is provided a remaining duration management which is easy for the user to understand.

In the transmission of a digital stream signal, e.g., a BS digital broadcast, the sending end controls the data rate. Therefore, the same Hi-Vision television signal may take different data rates. While it is easy for the user to recognize whether the transmitted stream is a Hi-Vision television signal or a standard television signal, it is difficult for the user to recognize and understand the data rate of the stream. In other words, a guaranteed recording for the erased duration which makes any sense to the user is to guarantee a recording of a standard television signal for the duration of an erased standard television signal.

However, even a standard television signal may take an actual data rate in the range of about 4 to 8 Mbps. Under such a situation where the data rate is controlled by the sending end and the data rate fluctuates, in order to realize a guaranteed recording for the erased duration, it would be necessary for both a 4 Mbps television signal and an 8 Mbps television signal to result in the same recording duration. In this case, the data amount incurred for the recording of the 4 Mbps television signal is half of the data amount of the 8 Mbps television signal, thus resulting in a substantial waste of recording capacity. Therefore, realization of a guaranteed recording for the erased duration may conversely be disadvantageous to the user. Hence, when performing a stream recording, it would be better to perform a capacity-base time management.

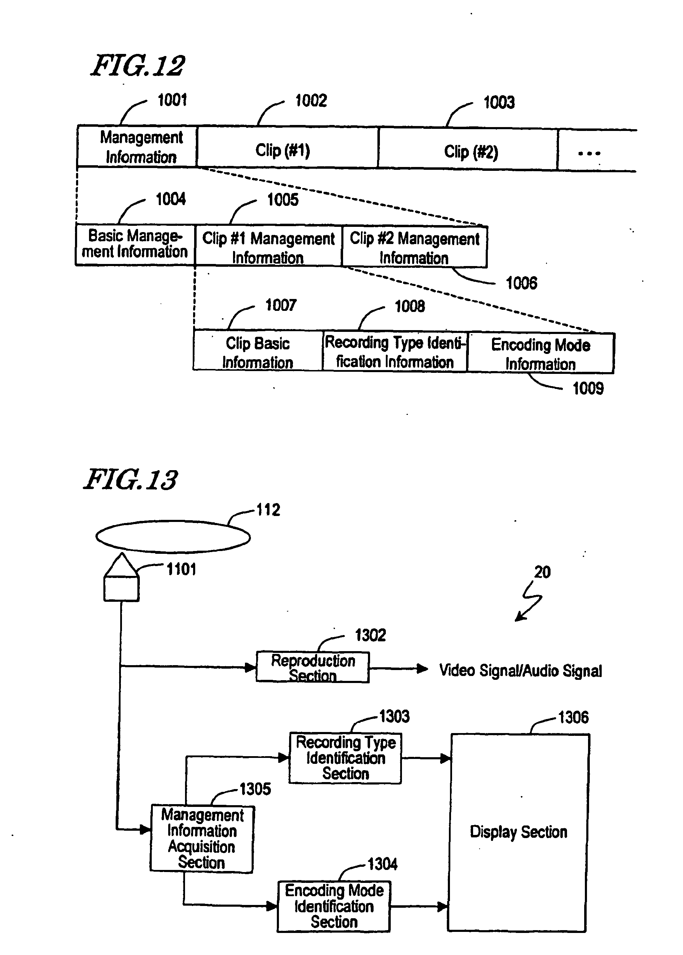

FIG. 12 shows the data structure of program data which is recorded on the storage medium 112 through the recording process by the recording processing section **121** described above.

On the storage medium **112,** management information **1001,** a clip (#1) **1002,** a clip (#2) **1003,** and the like are recorded. Each "clip" represents a unit of videorecording. Each clip is synonymous to a single videorecorded program, and is an encoded stream of the video signal/audio signal of the program. Accordingly, in the storage medium **112** of FIG. **12,** at least two programs are videorecorded.

The management information **1001** is management information for reproducing and recording the clips which are recorded on the storage medium **112.** The management information **1001** is composed of basic management information **1004** as well as management information **1005** and **1006**, which are the management information of clips **#1** and **#2**, respectively. In the basic management information **1004**, basic information such as the number of clips which are recorded on the storage medium **112** is recorded. The clip **#1** information **1005** is composed of clip basic information **1007,** recording type identification information **1008,** and encoding mode information **1009.** In the clip basic information, basic information such as a recording start address, recording duration, and the like of this clip is recorded. The recording type identification information **1008** is information concerning the so-called videorecording mode, and is information for identifying whether the clip is a stream which has been subjected to a stream recording process. The encoding mode information **1009** is, with respect to a stream which has been subjected to an encoding process and a recording process, information concerning the encoding parameter(s) in that encoding process. The encoding parameter(s) may be, for example, information identifying the bit rate, video resolution, and videorecording time mode in the encoding process.

Thus, by recording the recording type identification information **1008,** it is possible to identify whether the data stream of a recorded program has been stream-recorded or not. Moreover, by recording the encoding mode information **1009,** it becomes possible to know the parameter(s) in the encoding process of a re-encode recording process or a self-encode recording process, thus making it possible to identify the videorecording time mode.

Alternatively, a signal identifying the recording process which has been selected by the system controller **108** may be recorded on the storage medium **112.** The recorded position thereof may be, for example, a region in which to record the management information on the storage medium **112.** As a result, it becomes possible to further identify whether a piece of data which is recorded on the storage medium **112** is a direct recording of a digital stream signal which has been transmitted in a BS digital broadcast, or an encoded stream obtained through an encoding by an encoding processing section of a videorecording apparatus.

Now, the constitution of an apparatus to reproducing the program data shown in FIG. **12** will be described. FIG. **13** shows the constitution of a data processing apparatus **20** having a reproduction function. The data processing apparatus **20** reads out data from the storage medium 112 and reproduces a video signal/audio signal. In general, an apparatus having a recording function (e.g., an optical disk drive) also has a reproduction function. Therefore, the data processing apparatus **20** may be regarded as those constituent elements of the data processing apparatus **10** of FIG. **1** which are related to a reproduction function.

The data processing apparatus **20** includes a reproduction head **1101,** a reproduction section **1302,** a recording type identification section **1303**, an encoding mode identification section **1304,** a management information acquisition section **1305,** and a videorecording mode display section **1306.**

The video/audio reproduction section **1302** subjects recorded data to a decoding process to reproduce a video signal and an audio signal. In the case where the recording data is a TS, it is first separated into a video stream and an audio stream, and thereafter a decoding process for the video stream and a decoding process for the audio stream are performed. As the decoding process, a decoding process corresponding to the encoding method may be performed; a decoding process may be performed according to the MPEG2 video standard and the MPEG1 audio layer 2 standard.

The management information acquisition section 1305 reads out and acquires the management information which is recorded in a management region of the storage medium, and, from the management information, reads out the recording type identification information and the encoding mode information of the recording data to be reproduced (reproduced data). From the recording type identification information which has been read, the recording type identification section 1303 identifies whether the reproduced data is data which has been subjected to a stream recording process or not. Moreover, the encoding mode identification section 1304 identifies the videorecording time mode from the encoding mode information which has been read.

The display section 1306 displays the type of the recording process. Specifically, the display section 1306 displays whether the reproduced data is a stream-recorded data or not, as well as the videorecording time mode.

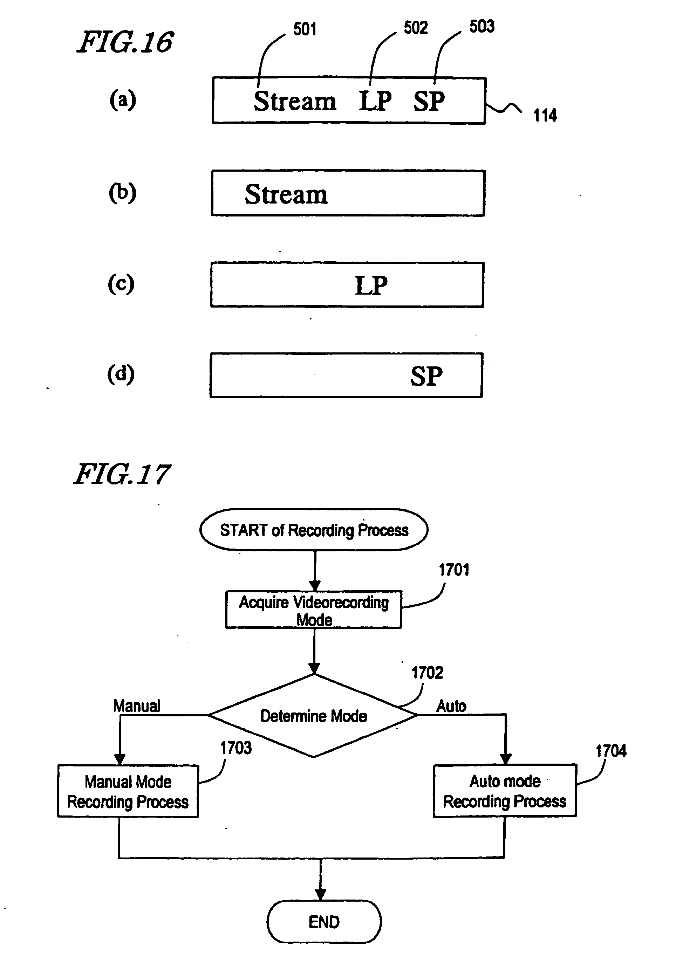

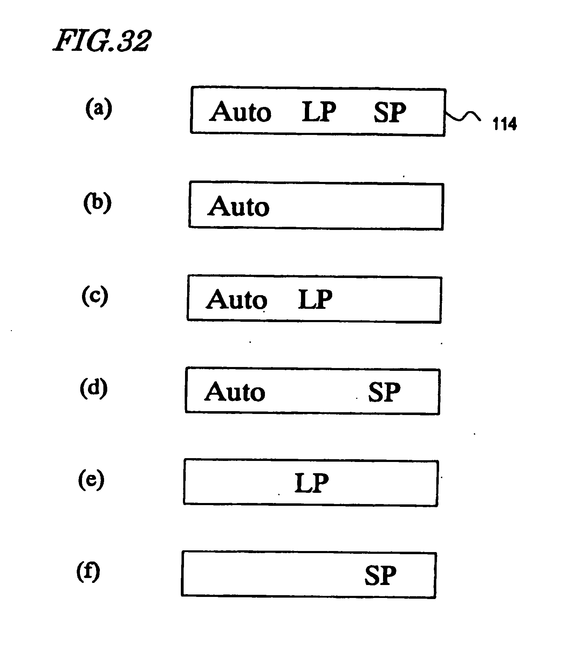

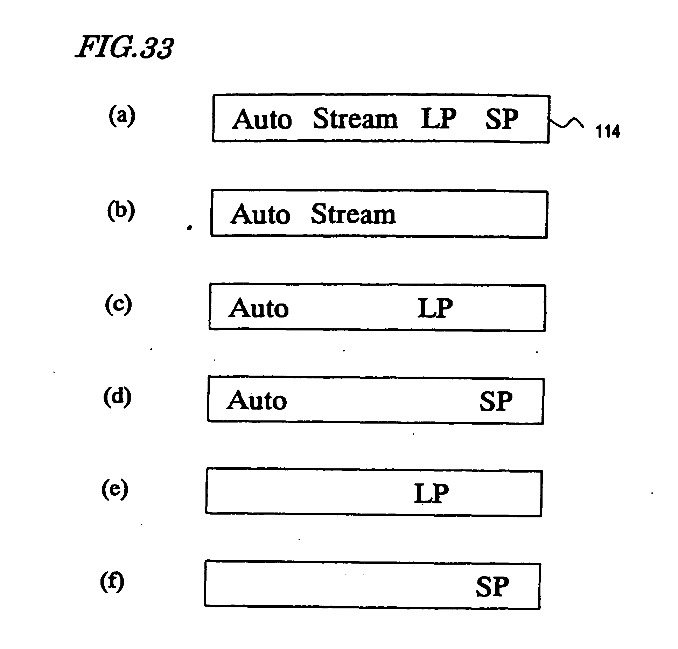

An example of the display section 1306 may be display tubes, similarly to the display section 114 of the data processing apparatus 10 (FIG. 5). In the case where the data processing apparatus 20 is included as a part of the data processing apparatus 10 that is related to the reproduction function, the display section 114 operates to display the videorecording mode during videorecording, and display the videorecording mode of the reproduced data during reproduction. Moreover, as will be described later with reference to FIG. 16, if the reproduced data is data which has been subjected to a stream recording process, Stream 501 on the display section 114 is activated for indication; and if the reproduced data is data which has been subjected to a re-encode recording process or a self-encode recording process in the LP mode, LP 502 is activated for indication. Alternatively, as will be described with reference to FIGS. 32 and 33, an indication of the corresponding recording mode is activated. "LP", "SP", and the like in FIGS. 16, 32, 33, and the like represent videorecording modes as determined by the user's selection.

Thus, the constitution and operation of the data processing apparatus 10 according to the present embodiment have been described. Although a plurality of variations of calculation processes have been illustrated with respect to each of the remaining amount calculation processes (1) to (3) in the above description, possible variations are not limited to calculation processes. Therefore, various variations concerning the operation of the data processing apparatus 10 of the present embodiment will be described below.

First, in the procedure of the remaining amount calculation process shown in FIG. 6, the remaining amount calculation process to be executed is determined based only on the recording process type. However, the determination of the remaining amount calculation process to be executed may also be made based on the type of the storage medium 112 and on the recording process type, or based on the type of the storage medium 112 and on the type of the input signal.

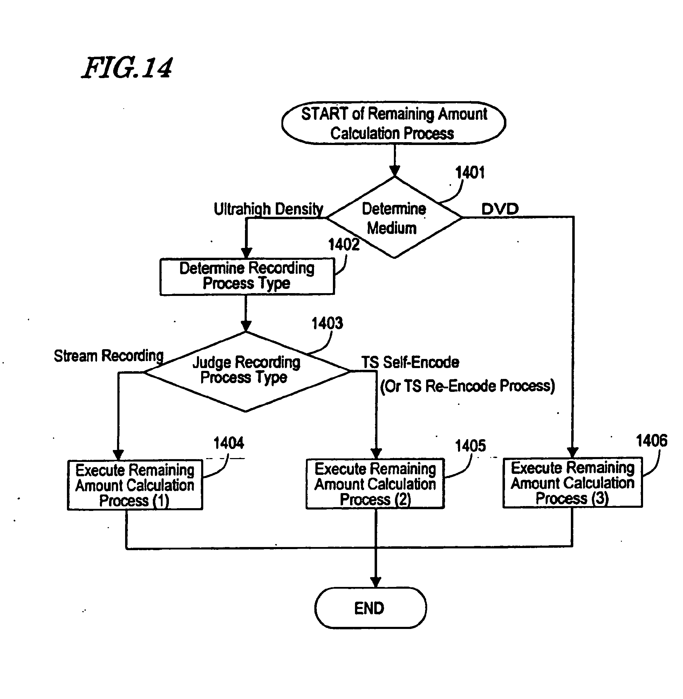

FIG. 14 shows the procedure of a remaining amount calculation process which is based on the type of the storage medium 112 and on the recording process type. First, at step 1401, the medium determination section 111 determines whether the storage medium 112 is an ultrahigh density RAM medium or a DVD-RAM medium. If the storage medium 112 is an ultrahigh density RAM medium, the system controller 108 proceeds to step 1402. On the other hand, if the storage medium 112 is a DVD-RAM medium, the process proceeds to step 1406, where the remaining amount calculation process (3) is executed. At step 1402, the type of recording process is decided. The types of recording process are the respective processes of: stream recording; TS self-encode recording; and TS re-encode recording. At step 1403, the system controller 108 judges which recording process is to be performed. In the case where a stream recording process is to be performed, the process proceeds to step 1404, where the remaining amount calculation process (1) is executed. In the case where a TS self-encode recording process or a TS re-encode recording is to be performed, the process proceeds to 1405, where the remaining amount calculation process (2) is executed.

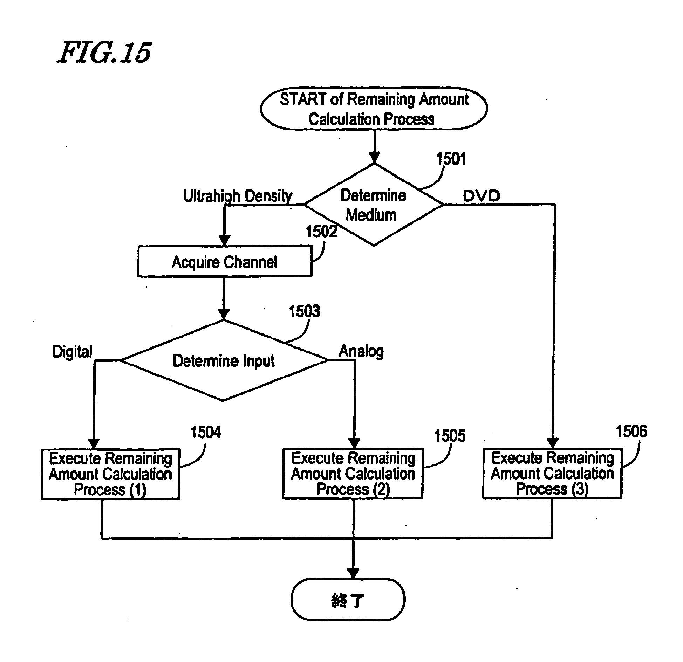

FIG. 15 shows the procedure of a remaining amount calculation process which is based on the type of the storage medium 112 and on the type of the input signal. First, at step 1501, the medium determination section 111 determines whether the storage medium 112 is an ultrahigh density RAM medium or a DVD-RAM medium. If the storage medium 112 is an ultrahigh density RAM medium, the system controller 108 proceeds to step 1502. On the other hand, if the storage medium 112 is a DVD-RAM medium, the process proceeds to step 1506, where the remaining amount calculation process (3) is executed. At step 1502, the system controller 108 acquires the channel which has been set via the channel setting section 109. At step 1503, the system controller 108 determines the input type of the channel which is set. In the case of a digital stream signal, the system controller 108 proceeds to step 1504, where the remaining amount calculation process (1) is executed. In the case of an analog television signal, the system controller 108 proceeds to 1505, where the remaining amount calculation process (2) is executed.

In the two other examples above, in the case where program data is to be recorded on a DVD-RAM medium, a PS self-encode recording or a PS re-encode recording is performed while performing a time-base remaining amount management. In the case where program data is to be recorded on an ultrahigh density RAM medium, a TS recording is performed while performing a capacity-base remaining amount management. The remaining amount managements are associated with the remaining amount calculation processes for the same reasons as those described in connection with FIG. 6.

Thus, by determining the remaining amount calculation process in accordance with the medium type and with the recording process type, or with the medium type and with the type of the input signal, an appropriate and accurate remaining amount calculation can be realized in connection with each recording process. As will be described later, this allows the capacity of the storage medium **112** to be efficiently utilized, thus realizing a remaining amount management which is easy for the user to understand.

Note that, in the case where recording is to be performed on an ultrahigh density RAM medium when a digital stream signal is input, the recording may be performed by decoding the digital stream signal and again performing an encoding process with a predetermined encoding parameter(s). In this case, a TS re-encode recording process will be peformed, and the remaining amount calculation process (2) may be selected.

Variations concerning the constitution of the data processing apparatus **10** described above are as follows. Firstly, the data processing apparatus **10** may further comprise a user interface for setting a videorecording time mode. The videorecording time mode is to be reflected on the encoding parameter(s) in the re-encode recording processing section **106** and the self-encode recording process **107.**

As the videorecording time mode, for example, a standard-time videorecording (SP) mode and a long-time videorecording (LP) mode may be set. In the case where the LP mode is selected, an encoding process is performed at a lower bit rate than that in the SP mode, in order to enhance the compression rate. Therefore, the system controller **108** inputs an encoding parameter(s) to the video encoders **201** and **305** for controlling them. Note that encoding parameters may also be set for the audio encoders **202** and **307,** in accordance with the videorecording time mode.

Moreover, videorecording time modes (encoding parameter(s)) may be separately set for the re-encode recording processing section **106** and the self-encode recording processing section **107.** As a result, detailed control by the user becomes possible. Moreover, the videorecording time mode (encoding parameter(s)) of only one of the re-encode recording processing section **106** and the self-encode recording processing section **107** may be set.

Furthermore, information concerning the encoding parameter(s) to be used in the re-encode recording processing section **106** and the self-encode recording processing section **107** may be recorded in a predetermined region of the storage medium **112.** The recorded position thereof may be, for example, a region on the storage medium **112** in which management information is recorded. The information concerning the encoding parameter(s) may be a bit rate which is represented as an encoding compression rate, or information identifying videorecording time modes such as LP and SP. By the system controller **108** reading it out from the storage medium, it becomes possible to identify the encoding parameter(s) in an encoding process.

Although two videorecording time modes, i.e., the LP mode and the SP mode, are illustrated in the above example, this is not a limitation. There is no limitation as to the number of modes, e.g., even higher image-quality modes or even longer-time modes.

Moreover, corresponding to the operations of the data processing apparatus **10,** details of the current process may be indicated on the display section **114.** FIGS. 16(a) to (d) show a display section **114** having a videorecording mode displaying function. The display section **114** comprises three videorecording mode display tubes, which respectively activate Stream **501,** LP **502,** and SP **503** for indication. FIG. **16(a)** shows all of them being activated.

FIG. **16(b)** shows "Stream" being activated. This is a state where a stream recording process is to be performed, i.e., a channel for a BS digital broadcast is selected and the program data is recorded on an ultrahigh density medium.

FIG. **16(c)** shows "LP" being activated. This is a state where a self-encode recording process or a re-encode recording process is to be performed, where the videorecording time mode is the LP mode. In other words, this is a state where a channel for a terrestrial analog broadcast or a channel for a BS digital broadcast is selected and the program data is recorded on a DVD-RAM medium.

FIG. **16(d)** shows "SP" being activated. This is a state where the self-encode recording processing section **107** or the re-encode recording processing section **106** is to perform a recording process, where the videorecording time mode is the SP mode. In other words, this is a state where a channel for a terrestrial analog broadcast or a channel for a BS digital broadcast is selected and the program data is recorded on a DVD-RAM medium.

The self-encode recording process and the re-encode recording process are both encoding processes to be performed in the data processing apparatus **10.** Therefore, it is important to the user whether a stream recording for directly recording an input signal is being performed or not. Therefore, as shown in FIGS. 16(b) to (d), by displaying on the display section **114** whether it is a stream recording or not, as well as the videorecording time mode when an encoding process is to be performed, it becomes possible for the user to easily recognize whether it is a stream recording or not, as well as the videorecording mode. The display section **114** is not limited to the above example, but may display information identifying at least one recording process.

(Embodiment 2)

The data processing apparatus **10** of Embodiment 1 has been illustrated as determining a recording process and performing recording in accordance with the input signal, the type of the loaded storage medium **112,** and the like.

In addition to the constitution of the data processing apparatus **10** of Embodiment 1, the data processing apparatus of the present embodiment has a constitution for performing a recording process in a videorecording mode which is set by the user himself or herself. As used herein, a "videorecording mode" refers to the type of a recording process, i.e., an auto mode recording process or an manual mode recording process. The auto mode recording process is identical to the process of the data processing apparatus of Embodiment 1. The manual mode recording process is to be set when the user desires to perform a videorecording while giving precedence to either the videorecording duration, video image quality, or the like, for example.

Hereinafter, the constitution and operation of the data processing apparatus of the present embodiment will be described. The data processing apparatus of the present embodiment has the same constitution as the constitution of the data processing apparatus **10** shown in FIG. **1.** Therefore, those portions of the constitution and operation which differ from the data processing apparatus **10** of Embodiment 1 will be described.

FIG. **17** is a flowchart showing a mode determining procedure of the data processing apparatus **10** according to the present embodiment. The data processing apparatus **10** according to the present embodiment has two types of recording processes (an auto mode recording process and a manual mode recording process). The switching between the auto mode and the manual mode is made by the user at the videorecording mode setting section **123,** for example. In other words, at the videorecording mode setting section **123,** it is possible to set the manual mode, and make the setting as to which one of the videorecording duration, the video image quality, and the like is to be given precedence when performing a videorecording. Regardless of whether the mode is the auto mode or the manual mode, a selection is made from a plurality of types of recording methods, when performing a recording process for a DVD-RAM medium and an ultrahigh density RAM medium for inputs of an analog television signal and a digital stream signal.

First, at -step **1701,** the system controller **108** acquires a videorecording mode which is selected. At step **1702,** the system controller **108** determines the videorecording mode. Specifically, if a videorecording mode has not been set via the videorecording mode setting section **123,** the system controller **108** recognizes the auto mode and proceeds to step **1704;** if a videorecording mode has been set, the system controller **108** recognizes the manual mode and proceeds to step **1703.** At step **1703,** a manual mode recording process is performed. Step **1704** is a step at which an auto mode recording process is performed.

The recording processing section **121** performs a recording process which is in accordance with either the auto mode or the manual mode. Hereinafter, with respect to each mode, the signal recording processes when a digital stream signal and an analog television signal are input will be described. Note that the relationship between a selection process and a recording process related to the following descriptions is as described in the control table **419** in the table memory **122.**

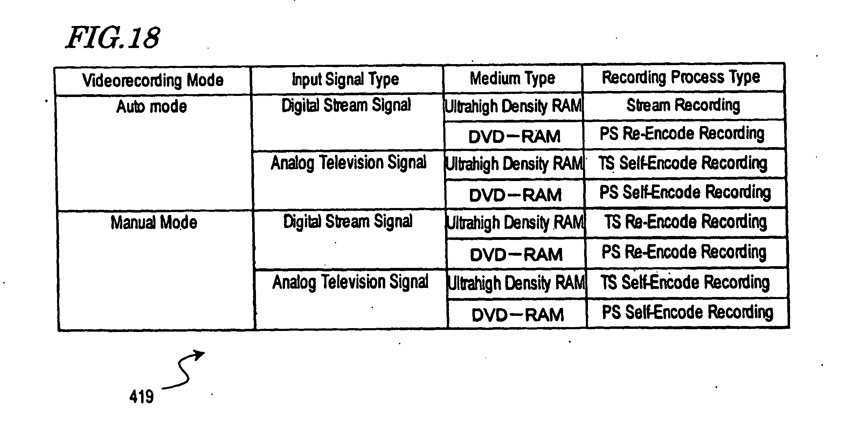

FIG. **18** shows an exemplary control table **419.** As is clear from the control table **419,** in both the auto mode recording process and the manual mode recording process, the type of recording process is determined in accordance with the input signal and the medium type. The system controller **108** may give instructions to the respective constituent elements in accordance with the control table **419,** or may output instructions for realizing the below-described processes without providing such a table. The auto mode in FIG. **18** has the same details as those shown in FIG. **4,** and its specific processing procedure is as shown in FIG. **7.** Therefore, the description of the auto mode is omitted. Regardless of whether the mode is the auto mode or the manual mode, a remaining amount calculation process (1) to (3) corresponding to the determined recording process is uniquely determined, and is capable of displaying the remaining duration and the like. For example, as shown in FIG. **4,** regardless of whether the mode is the auto mode or the manual mode, the stream recording process is associated with the remaining amount calculation process (1); the TS self-encode recording process is associated with the remaining amount calculation process (2); and the PS re-encode recording process and the PS self-encode process are associated with the remaining amount calculation process (3) for execution. The particulars of the remaining amount calculation processes (1) to (3) have been described in connection with Embodiment 1, and the descriptions thereof are omitted.

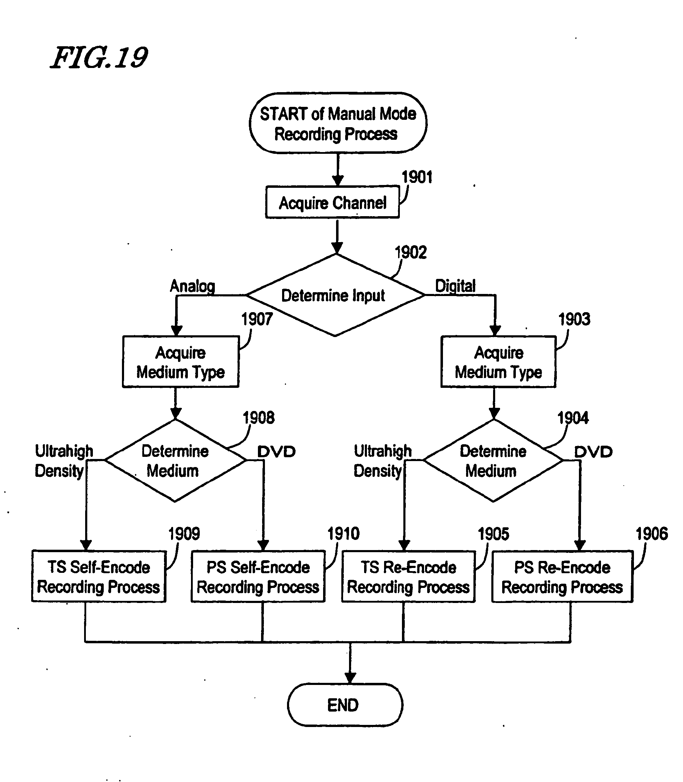

FIG. **19** shows a recording process determining procedure in the manual mode recording process. At step **1901,** the system controller **108** acquires the input channel information as selected by the user. At step **1902,** the system controller **108** determines the type of the input signal. If the input signal is an analog television signal, the process proceeds to step **1907;** if the input signal is the digital stream signal, the process proceeds to step **1903.** At step **1903,** the system controller **108** acquires the type of the storage medium for which a recording process is currently to be performed. At the next step **1904,** the system controller **108** determines the type of the storage medium. In the case of a DVD-RAM medium, the process proceeds to step **1906.** In the case of an ultrahigh density RAM medium, the process proceeds to step **1905.** At step **1905,** the input digital signal is re-encoded into a TS, and recorded onto an ultrahigh density medium. On the other hand, at step **1906,** the system controller **108** reencodes the input digital signal into a PS, and records it onto a DVD-RAM medium.

At step **1907,** the system controller **108** acquires the type of the storage medium for which a recording process is currently to be performed. At step **1908,** the type of the storage medium is determined. In the case of a DVD-RAM medium, the process proceeds to step **1910.** In the case of an ultrahigh density RAM medium, the process proceeds to step **1909.** At step **1909,** the input analog signal is self-encoded into a TS, and recorded onto an ultrahigh density medium. On the other hand, at step **1910,** the system controller **108** self-encodes the input analog signal into a PS, and records it onto a DVD-RAM medium.

In the encoding process in the re-encode recording process or the self-encode recording process, the encoding parameter(s) may be varied to introduce a plurality of modes concerning videorecording duration, e.g., a long-time videorecording mode or a standard-time videorecording mode.

In the auto mode, the user only selects a channel on which to perform a videorecording, whereby a recording process which is suitable for the input signal and the storage medium is performed. In the auto mode, in the case of performing a stream recording process (where an input digital stream signal is directly recorded), the data amount of the incoming stream is controlled by the sending end. Therefore, when performing a recording on a storage medium having little vacant capacity, it is possible that all of the programs to be videorecorded may not be videorecorded.

On the other hand, in the manual mode, it is possible to perform a recording in a videorecording time mode which conforms to the user's intention. In the manual mode, an encoding process will always be performed, so that it is possible to control the data amount of the encoded stream to be recorded. Therefore, it is possible to perform a videorecording which is in accordance with the vacant capacity; e.g., when the vacant capacity is low, videorecording may be performed in the long-time videorecording mode to prolong the videorecording duration.

Thus, by providing the auto mode and the manual mode, it becomes possible to realize a highly convenient videorecording process which more flexibly suits the user's preferences.

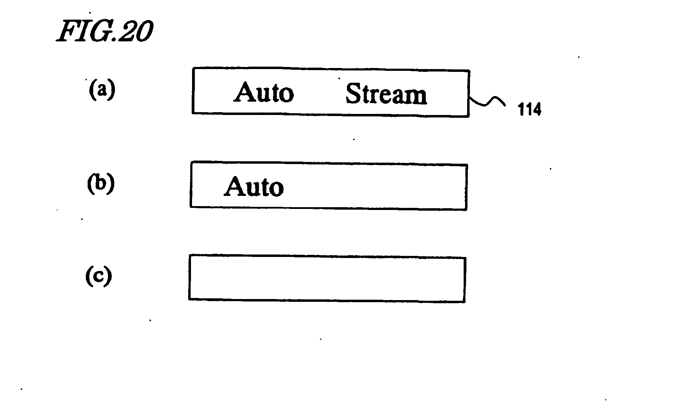

Furthermore, during a recording process, by indicating which one of the auto mode and manual modes has been selected and what sort of recording process is to be performed, the user's convenience is further enhanced. FIGS. 20(a) to (c) show examples of display patterns on a display section **114** having a videorecording mode displaying function. The display section **114** comprises two videorecording mode display tubes, which are activated to indicate "Auto" and "Stream", respectively.

FIG. **20(a)** shows "Auto" and "Stream" being activated. This is a state where the auto mode is selected and a stream recording process is to be performed. In other words, this is a state where a digital stream signal is input and the program data is recorded onto an ultrahigh density medium. FIG. **20(b)** shows only "Auto" being activated. This is a state where the auto mode is selected and a re-encode recording process or a self-encode recording process is to be performed. In other words, this is a state where a digital stream signal is input and the program data is recorded onto a DVD-RAM medium, or where an analog television signal is input. FIG. **20 (c)** shows the display tubes of the display section **114** not being activated. This is state where the manual mode has been selected. With this constitution, the user is able to recognize the videorecording mode and recording process which are selected.

Hereinafter, the contents to be displayed on the display section **114** will be described with specific references to the auto mode/manual mode setting in the data processing apparatus **10,** the recording rate, the type of the storage medium **112,** and the like.

First, the specific details of the "auto mode" and the "manual mode" discussed below will be described. Firstly, the "auto mode" is classified into: a stream recording when a digital stream signal is recorded on an ultrahigh density medium (BD); and a self-encode recording/re-encode recording, which is performed in the SP mode when an analog signal is input or when a digital stream signal is recorded onto a DVD-RAM medium. The switching between the stream recording and the self-encode recording/re-encode recording is automatically made in the processing by the data processing apparatus **10.** During a self-encode recording/re-encode recording, the videorecording time mode is fixed to the SP mode.

On the other hand, in the "manual mode", four videorecording time modes, i.e., the LP mode, the SP mode, the XP mode, or the B-XP mode, are set by the user. Note that, when the B-XP mode is set while a DVD-RAM medium is loaded, the videorecording is to be performed in the XP mode.

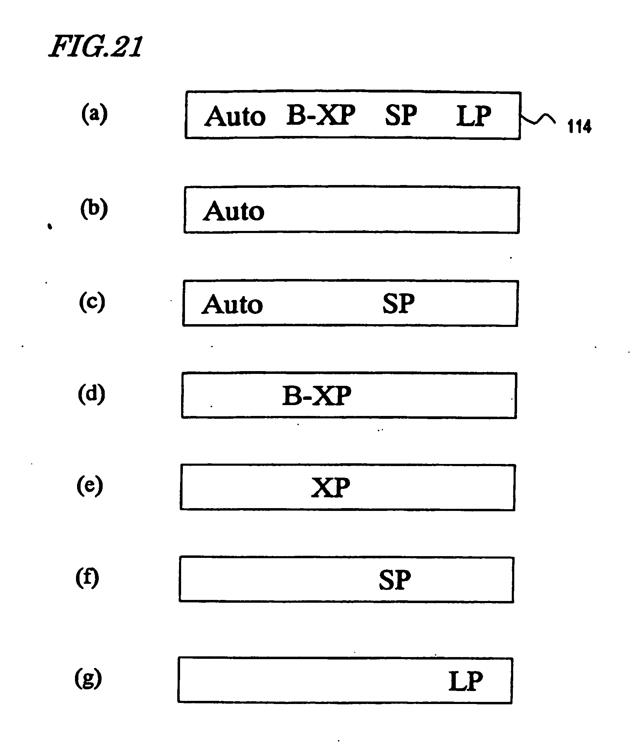

FIG. **21(a)** shows examples of display tubes in the display section **114.** The display section **114** is generally divided into four display tubes "Auto", "B-XP", "SP", and "LP". FIGS. **21(b)** to **(g)** show possible display states to be taken. FIG. **21(b)** shows a display state when the auto mode is set. FIG. **21(o)** shows a display state when the auto mode is set and a self-encode recording process is being performed. FIG. **21(d)** shows a state where the BXP mode is set. FIG. **21(e)** shows a state where the XP mode is set. FIG. **21(f)** shows a state where the SP mode is set. FIG. **21 (g)** shows a state where the LP mode is set.

Hereinafter, for ease of understanding, the relationship between the processes which are performed in the respective display states will be described on the basis of control tables **419.** Each control table **419** shows a correspondence between: the type of the storage medium **112** which is loaded; the type of the input signal (input source); the type of the remaining amount calculation adopted; and the recording rate used for the remaining amount calculation.

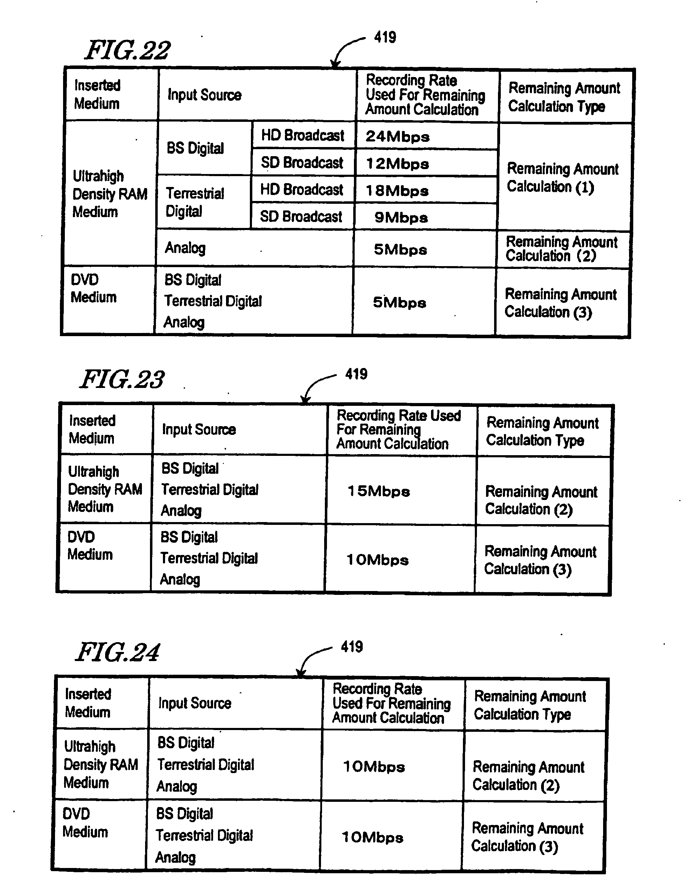

FIG. **22** shows the control table **419** when the auto mode is set. During a videorecording process under this mode, the display section **114** performs display as shown in FIG. **21(b).** If the input digital stream signal is an HD signal, an HD broadcast is recognized, and a remaining amount calculation process is performed with a recording rate of 24 Mbps. If the input digital stream signal is an SD signal, an SD broadcast is recognized, and a remaining amount calculation process is performed with a recording rate of 12 Mbps. If it is impossible to detect whether the input digital stream signal is an HD signal or an SD signal, a remaining amount calculation process is performed with a recording rate of 24 Mbps.

On the other hand, if the storage medium is a DVD and the input source is an analog signal, a self-encode recording process is performed. In this case, the display section **114** performs display as shown in FIG. **21(c).**

FIG. **23** shows the control table **419** when the BXP mode is set. During a videorecording process under this mode, the display section **114** performs display as shown in FIG. **21(d).** If the storage medium **112** is a BD, the program is videorecorded under the "BXP" mode with a recording rate of 15 Mbps.

However, if the storage medium **112** is a DVD, the program is videorecorded under the XP mode at 10 Mbps. The reason is that, according to the DVD standard, the maximum recording rate is limited to 10 Mbps. Note that the display section **114** displays "XP" (FIG. **21(e))** while a DVD is loaded.

FIG. **24** shows the control table **419** when the XP mode is set. During a videorecording process under this mode, the display section **114** performs display as shown in FIG. **21(e).**

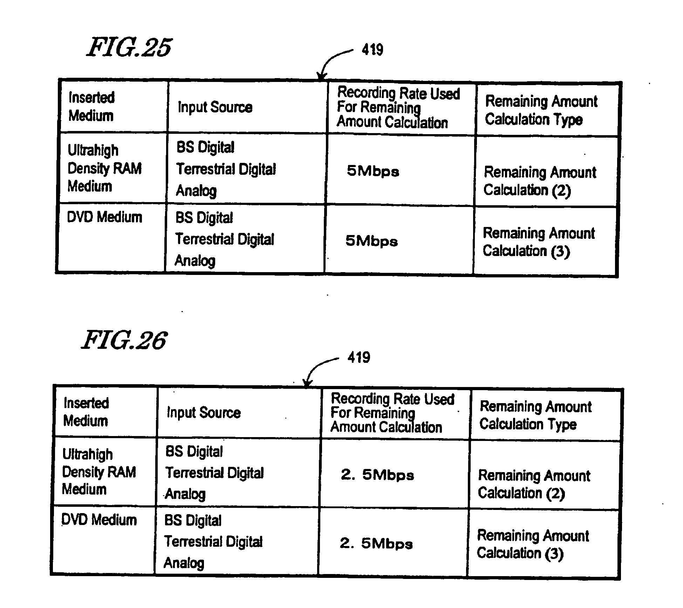

FIG. **25** shows the control table **419** when the SP mode is set. During a videorecording process under this mode, the display section **114** performs display as shown in FIG. **21(f).**

FIG. **26** shows the control table **419** when the LP mode is set. During a videorecording process under this mode, the display section **114** performs display as shown in FIG. **21(g).**

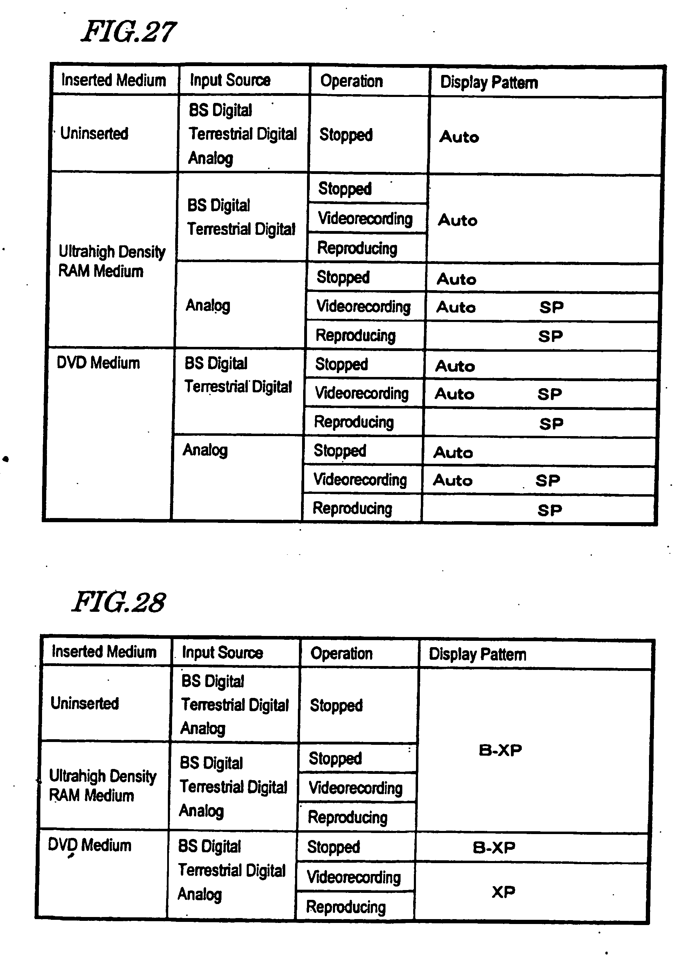

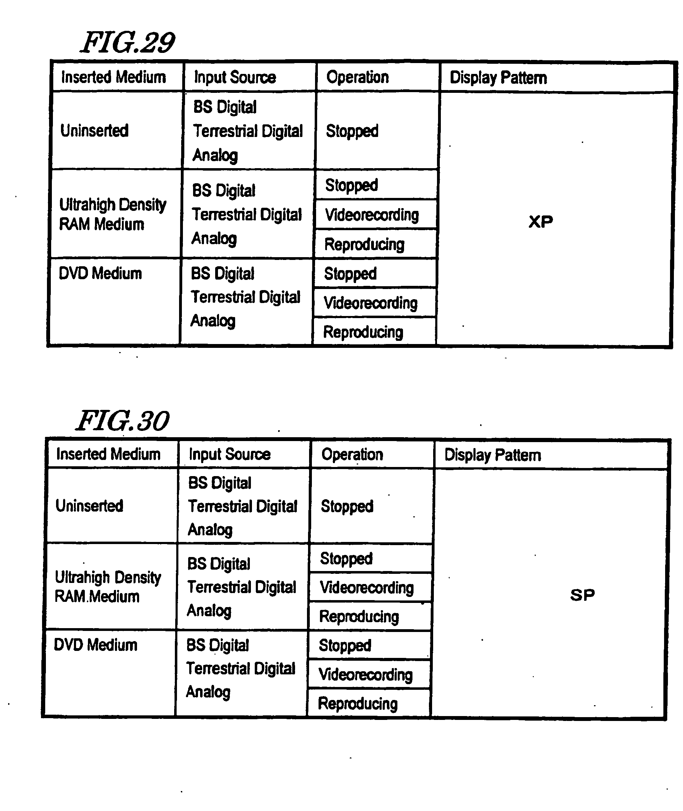

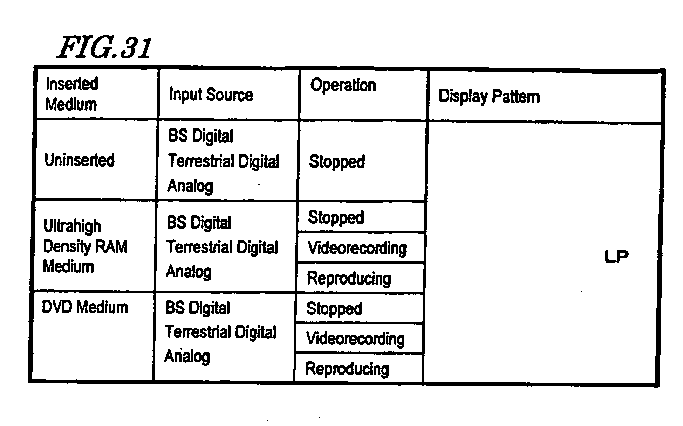

The relationship between each mode and the display pattern on the display section **114** is shown in FIG. **27** to FIG. **31.** FIG. **27** shows a display pattern on the display section **114** when the auto mode is set, the display pattern being in accordance with the type of the storage medium **112,** the type of the input source, and the like. FIG. **28** shows a display pattern on the display section **114** when the BXP mode is set, the display pattern being in accordance with the type of the storage medium **112,** the type of the input source, and the like. FIG. **29** shows a display pattern on the display section **114** when the XP mode is set, the display pattern being in accordance with the type of the storage medium **112,** the type of the input source, and the like. FIG. **30** shows a display pattern on the display section **114** when the SP mode is set, the display pattern being in accordance with the type of the storage medium **112,** the type of the input source, and the like. FIG. **31** shows a display pattern on the display section **114** when the LP mode is set, the display pattern being in accordance with the type of the storage medium **112,** the type of the input source, and the like. In FIG. **27** to FIG. **31,** a display pattern when "reproducing" is meant as an indication to be made when data which has been videorecorded under that condition is reproduced.

The indications on the display section **114** may be simplified. This point will be described with reference to FIGS. 32(a) to (f) and FIG. **33.**

First, specific details of the "auto mode" and the "manual mode" which will be discussed in connection with FIG. **32** and FIG. **33** will be described. The definition of "auto mode" is generally similar to the aforementioned definition of "auto mode", except for the following difference: the videorecording time mode in a self-encode recording/re-encode recording is the SP mode or the LP mode, either one of which is set by the user. On the other hand, in the "manual mode", the videorecording time mode is the SP mode or the LP mode, either one of which is set by the user. Note that the user is able to set either the SP mode or the LP mode, independently for each of the "auto mode" and the "manual mode".

FIG. **32(a)** shows examples of text characters which can be displayed on the display section **114.** The display section **114** only displays "Auto", "LP", and "SP".

FIG. **32(b)** shows only "Auto" being activated. This indicates that a recording process is performed by the stream recording processing section 105. In the aforementioned example, "Auto" alone is activated when a channel for a BS digital broadcast is set, and a signal recording for an ultrahigh density medium is performed.

FIG. **32 (c)** shows "Auto" and "LP" being activated. This indicates that a self-encode recording process or a re-encode recording process is performed in the LP mode.

FIG. **32(d)** shows "Auto" and "SP" being activated. This indicates that the auto mode is selected, and a self-encode recording process or a re-encode recording process is performed in the SP mode.

FIG. **32(e)** shows "LP" being activated. This indicates that the manual mode is selected, and that a self-encode recording process or a re-encode recording process is performed in the LP mode.

FIG. **32(f)** shows "SP" being activated. This indicates that the manual mode is selected, and that a self-encode recording process or a re-encode recording process is performed in the SP mode.

With this constitution, it is possible for the user to recognize the videorecording mode, the recording process, and the videorecording time mode that are selected.

In a variant of the display pattern shown in FIG. **32,** the stream recording process may additionally be displayed, from the perspective of enhancing the user's convenience. FIG. **33(a)** shows examples of text characters which can be displayed on the display section **114.** As compared with FIG. **32(a),** there is a difference in that the display section **114** shown in FIG. **33(a)** includes a "Stream" indication.

FIG. **33(b)** shows "Auto" and "Stream" **902** being activated. This indicates that the auto mode is selected, and that a stream recording process is performed.

FIG. **33 (c)** shows "Auto" and "LP" being activated. This indicates that the auto mode is selected, and that a self-encode recording process or a re-encode recording process is performed in the LP mode.

FIG. **33(d)** shows "Auto" and "SP" being activated. This indicates that the auto mode is selected, and that a self-encode recording process or a re-encode recording process is performed in the SP mode.

FIG. **33(e)** shows the "LP" being activated. This indicates that the manual mode is selected, and that a self-encode recording process or a re-encode recording process is performed in the LP mode.

FIG. **33(f)** shows the "SP" being activated. This indicates that the manual mode is selected, and that a self-encode recording process or a re-encode recording process is performed in the SP mode.

With this constitution, it is possible for the user to recognize the videorecording mode, the recording process, and the videorecording time mode that are selected.

It has been illustrated that the data processing apparatus **10** handles the manual/auto setting and the videorecording mode selection in the videorecording mode setting section **123.** However, these may be unified. For example, a videorecording mode button may be provided, and cyclic settings may be made possible with each pressing of the videorecording mode button, e.g., auto →LP→SP→auto. If auto is selected, the auto mode is set. If LP or SP is selected, it is considered that the manual mode is selected, and the LP or SP mode is selected as the videorecording time mode.

The auto videorecording time mode setting user interface **601** may be omitted. In this case, the videorecording time mode in the re-encode recording process or the self-encode recording process under the auto mode is previously fixed in the apparatus. As a result, the auto mode can be made into a simpler videorecording mode.

Thus, embodiments of the present invention have been described. Although various examples were illustrated in the description of each embodiment, the present invention is applicable without being limited thereto.

For example, unlike in the embodiments, as for the input signal to the data processing apparatus **10,** a digital stream signal may be a Cs digital broadcast signal, or a signal which is transmitted via a digital interface such as iLink. Moreover, the input signal may be a signal from a digital camcorder. Moreover, DV data of a consumer-use digital camcorder may similarly be treated as a digital stream signal. In this case, input is given from a DV terminal, and the DV terminal may be allocated as one channel. A stream recording process of directly recording DV data or a re-encode recording process is selected in accordance with the storage medium. In the case of a DVD-RAM medium, a re-encode recording process is performed; and in the case of an ultrahigh density RAM medium, a stream recording process is performed, for example.

The input signal may be of two types, i.e., an uncompressed digital signal and a compressed digital signal. In the case of an uncompressed digital signal, a recording process may be selected similarly to the case of an analog signal as illustrated in the examples. This is because, in the case of an analog signal, it is subjected to a digital conversion process in the encoding process so as to be treated as an uncompressed digital signal. Furthermore, there may be three or more signal types.

The types of storage media are only exemplary. A DVD-R, DVD-RW, DVD+R, DVD+RW, CD-R, CD-RW, or any other optical disk medium may be used. Alternatively, a semiconductor memory, a magnetic storage medium or the like may be used, and their types may be arbitrary so long as there are two or more types.

Furthermore, the types of encoding methods to be performed in a recording process are only exemplary, too; they may conform to other encoding methods such as MPEG4, and the number of their types may be arbitrary so long as there are two or more types.

The functions of the data processing apparatus in each of the above-described embodiments may be realized by executing software. For example, the operation of each constituent element may be controlled by the system controller **108** executing a computer program. The computer program may be constructed so as to perform processes in accordance with the flowcharts shown in FIGS. **6** to **8, 11,** and **15,** for example.

The computer program may be recorded on a storage medium, such as: an optical storage medium, e.g., an optical disk; a semiconductor storage medium, e.g., an SD memory card or an EEPROM; or a magnetic storage medium, e.g., a flexible disk. Note that the data processing apparatus **10** can acquire the computer program not only via a storage medium, but also via electric communications lines, e.g., the Internet.

## INDUSTRIAL APPLICABILITY

According to the present invention, there is provided a data processing apparatus or the like which is capable of determining a recording method based on the type of an input signal and the type of a storage medium, and determining a remaining amount calculation method which is in accordance with the recording method and calculating a remaining duration. Since the remaining amount calculation method differs depending on the recording method, it is possible to calculate the remaining duration in a more appropriate and accurate manner. As a result, the user can recognize the calculated remaining duration via display tubes or the like, and the user's convenience is highly enhanced.

**Claims**

1. A data processing apparatus capable of writing program data to a plurality of types of storage media (112), comprising:

   a receiving section for receiving a signal (101, 102) concerning program data;
   a determination section (111) for determining a type of a storage medium (112) having been loaded to the data processing apparatus;
   a recording processing section (121) for recording program data obtained from the signal onto the storage medium (112), via one of the processes of: a stream recording process, in which the program data is neither decoded nor encoded; and an encode recording process, in which the program data is at least encoded;
   **characterized by**
   a selection section (104) for selecting one of the stream recording process and the encode recording process in accordance with a type of the storage medium (112);
   a calculation section (115) for selecting a first remaining amount calculation process which is based on a remaining capacity of the storage medium (112) and on a transmission rate of the program data, when a stream recording process is selected; or a second remaining amount calculation process which is based on an encoding rate, when an encode recording process is selected, the calculation section (115) calculating, by the selected calculation process, a remaining duration for which it is possible to perform recording on the storage medium (112); and
   a display section (114) for displaying the calculated remaining duration.

2. The data processing apparatus of claim 1, wherein,
   the storage media (112) are differentiated in type depending on recording capacity;
   the receiving section receives one of the signals of a digital signal (101) and an analog signal (102);
   the recording processing section (121) selects the encode recording process for any storage medium (112) having a recording capacity equal to or lees than a predetermined reference capacity; and
   the calculation section (115) selects a second remaining amount calculation process.

3. The data processing apparatus of claim 2, wherein,
   the encode recording process includes a first encode recording process of subjecting the program data to a decoding and thereafter an encoding process and a second encode recording process of subjecting the program data to an encoding process;
   the recording processing section (121) selects the first encode recording process when the receiving section receives the digital signal (101), and selects the second encode recording process when the receiving section receives the analog signal (102); and
   the calculation section (115) calculates the remaining duration by performing the second remaining amount calculation process based further on a recorded duration representing an amount of time for which a recording process has been performed and on a recording rate.

4. The data processing apparatus of claim 3, further comprising a memory for storing a reference recording duration, the reference recording duration representing a maximum duration for which the program data can be recorded on the unused storage medium (112), wherein the calculation section (115) calculates a reference recorded duration by normalizing the recorded duration with the recording rate, determines a reference remaining duration by subtracting the reference recorded duration from the reference recording duration stored in the memory, and calculates the remaining duration based on the reference remaining duration and on the encoding rate.

5. The data processing apparatus of claim 1, wherein,
   the storage media (112) are differentiated in type depending on recording capacity;
   the receiving section receives a digital signal (101);
   the recording processing section (121) selects the stream recording process for any storage medium (112) having a recording capacity equal to or greater than a predetermined reference capacity; and
   the calculation section (115) selects the first remaining amount calculation process.

6. The data processing apparatus of claim 5, wherein the signal (101, 102) includes program information specifying a transmission rate and a broadcasting duration of the program data,
   the data processing apparatus further comprising a controller (108) for extracting the program information from the received signal (101, 102),
   wherein the calculation section (115) calculates the remaining duration based on the extracted transmission rate and broadcasting duration.

7. The data processing apparatus of claim 6, wherein the calculation section (115) calculates a data amount of each of one or more program data based on the transmission rate and broadcasting duration, determines a cumulative data amount obtained by cumulatively adding each data amount until exceeding the remaining capacity, and determining a cumulative broadcasting duration obtained by cumulatively adding each broadcasting duration corresponding to the added data amount, and determines the remaining duration by subtracting a broadcasting duration corresponding to any data amount exceeding the remaining capacity from the cumulative broadcasting duration.

8. The data processing apparatus of claim 1, wherein, the storage media (112) are differentiated in type depending on recording capacity; the receiving section receives an analog signal (102); the recording processing section (121) selects the encode recording process for any storage medium having a recording capacity equal to or greater than a predetermined reference capacity; and the calculation section (115) calculates the remaining duration by performing the second remaining amount calculation process based further on the remaining capacity of the storage medium (112).

9. The data processing apparatus of claim 1, wherein the display section (114) further displays information identifying the recording process selected by the recording processing section (121).

10. The data processing apparatus of claim 9, wherein the display section (114) displays at least one of the encoding rate, a resolution, and a frequency if the encode recording process is selected by the recording processing section (121).

11. A data processing method of writing in a data processing apparatus (10) program data to a plurality of types of storage media (112), comprising the steps of:

loading a storage medium (112) to the data processing apparatus (10); and receiving a signal (101, 102) concerning program data; determining (703, 707) a type of a storage medium (112) having been loaded; selecting (704) one of: a stream recording process (705), in which the program data is neither decoded nor encoded; and an encode recording process (706), in which the program data is at least encoded; recording (705, 706) program data obtained from the signal (101, 102) onto the storage medium (112), via one of the stream recording process (705) and the encode recording process (706) in accordance with a type of the storage medium (112); selecting (602) a first remaining amount calculation process (603) which is based on a remaining capacity of the storage medium (112) and on a transmission rate of the program data, when a stream recording process (705) is selected; or a second remaining amount calculation process (605) which is based on an encoding rate, when an encode recording process (706) is selected, and calculating, by the selected calculation process (603, 605), a remaining duration for which it is possible to perform recording on the storage medium (112); and displaying the calculated remaining duration.

12. The data processing method of claim 11, wherein, the storage media (112) are differentiated in type depending on recording capacity; the receiving step receives one of the signals of a digital signal (101) and an analog signal (102); the recording step selects the encode recording process (706) for any storage medium (112) having a recording capacity equal to or lees than a predetermined reference capacity; and the calculating step selects a second remaining amount calculation process (605).

13. The data processing method of claim 12, wherein, the encode recording process includes a first encode recording process (706) of subjecting the program data to a decoding and thereafter an encoding process and a second encode recording process (709; 710) of subjecting the program data to an encoding process; the recording step selects the first encode recording process (706) when the receiving section receives the digital signal (101), and selects the second encode recording process (709; 710) when the receiving section receives the analog signal (102); and

the calculating step calculates the remaining duration by performing the second remaining amount calculation process (605) based further on a recording rate and on a recorded duration representing an amount of time for which a recording process has been performed.

14. The data processing method of claim 13, further comprising a step of storing a reference recording duration, the reference recording duration representing a maximum duration for which the program data can be recorded on the unused storage medium (112),
wherein the calculating step calculates a reference recorded duration by normalizing the recorded duration with the recording rate, determines a reference remaining duration by subtracting the reference recorded duration from the reference recording duration stored in the memory, and calculates the remaining duration based on the reference remaining duration and on the encoding rate.

15. The data processing method of claim 11, wherein,
the storage media (112) are differentiated in type depending on recording capacity;
the receiving step receives a digital signal (101);
the recording step selects the stream recording process (705) for any storage medium (112) having a recording capacity equal to or greater than a predetermined reference capacity; and
the calculating step selects the first remaining amount calculation process (603).

16. The data processing method of claim 15, wherein the signal (101, 102) includes program information specifying a transmission rate and a broadcasting duration of the program data,
the data processing method further comprising a step of extracting the program information from the received signal (101, 102),
wherein the calculating step (603, 605) calculates the remaining duration based on the extracted transmission rate and broadcasting duration.

17. The data processing method of claim 16, wherein the calculating step (603, 605) calculates a data amount of each of one or more program data based on the transmission rate and broadcasting duration,
determines a cumulative data amount obtained by cumulatively adding each data amount until exceeding the remaining capacity, and determining a cumulative broadcasting duration obtained by cumulatively adding each broadcasting duration corresponding to the added data amount, and
determines the remaining duration by subtracting a broadcasting duration corresponding to any data amount exceeding the remaining capacity from the cumulative broadcasting duration.

18. The data processing method of claim 11, wherein,
the storage media (112) are differentiated in type depending on recording capacity;
the receiving step receives an analog signal (102);
the recording step selects the encode recording process for any storage medium (112) having a recording capacity equal to or greater than a predetermined reference capacity; and
the calculating step calculates the remaining duration by performing the second remaining amount calculation process based further on the remaining capacity of the storage medium (112).

19. The data processing method of claim 11, wherein the displaying step further displays information identifying the recording process selected by the recording step.

20. The data processing method of claim 19, wherein the displaying step displays at least one of the encoding rate, a resolution, and a frequency if the encode recording process is selected by the recording step.

**Patentansprüche**

1. Datenverarbeitungsvorrichtung, die in der Lage ist, Programmdaten auf eine Mehrzahl von Typen von Speichermedien (112) zu schreiben, umfassend:

einen Empfangsabschnitt zum Empfangen eines Programmdaten betreffenden Signals (101, 102);
einen Bestimmungsabschnitt (111) zum Bestimmen eines Typs eines Speichermediums (112), das auf die Datenverarbeitungsvorrichtung geladen wurde;
einen Aufzeichnungs-Verarbeitungsabschnitt (121) zum Aufzeichnen aus dem Signal erhaltener Programmdaten auf das Speichermedium (112), durch einen Stream-Aufzeichnungsprozess, in dem die Programmdaten weder dekodiert noch kodiert werden oder einen Kodierungs-Aufzeichnungsprozess, in dem die Programmdaten wenigstens kodiert werden;

**gekennzeichnet durch**

einen Auswahlabschnitt (104) zum Auswählen entweder des Stream-Aufzeichnungsprozesses oder des Kodierungs- Aufzeichnungsprozesses in Übereinstimmung mit einem Typ des Speichermediums (112);

einen Berechnungsabschnitt (115) zum Auswählen eines ersten Berechnungsprozesses für eine Restmenge, der auf einer Restkapazität des Speichermediums (112) und auf einer Übertragungsrate der Programmdaten beruht, wenn ein Stream-Aufzeichnungsprozess ausgewählt wird; oder eines zweiten Berechnungsprozesses für eine Restmenge, der auf einer Kodierrate beruht, wenn ein Kodierungs-Aufzeichnungsprozess ausgewählt wird, wobei der Berechnungsabschnitt (115) mit dem ausgewählten Berechnungsprozess eine Restdauer berechnet, für die es möglich ist, Aufzeichnen auf das Speichermedium (112) auszuführen; und

einen Anzeigeabschnitt (114) zum Anzeigen der berechneten Restdauer.

2. Datenverarbeitungsvorrichtung nach Anspruch 1, wobei

die Speichermedien (112) dem Typ nach abhängig von der Aufzeichnungskapazität unterschieden werden;

der Empfangsabschnitt ein digitales Signal (101) oder ein analoges Signal (102) empfängt;

der Aufzeichnungs-Verarbeitungsabschnitt (121) den Kodierungs-Aufzeichnungsprozess für jedes Speichermedium (112) mit einer Aufzeichnungskapazität, die kleiner oder gleich einer vorbestimmten Referenzkapazität ist, auswählt; und

der Berechnungsabschnitt (115) einen zweiten Berechnungsprozess für eine Restmenge auswählt.

3. Datenverarbeitungsvorrichtung nach Anspruch 2, wobei

der Kodierungs-Aufzeichnungsprozess einen ersten Kodierungs-Aufzeichnungsprozess des Unterziehens der Programmdaten einem Dekodier- und danach einem Kodierprozess und einen zweiten Kodierungs-Aufzeichnungsprozess des Unterziehens der Programmdaten einem Kodierprozess einschließt;

der Aufzeichnungs-Verarbeitungsabschnitt (121) den ersten Kodierungs-Aufzeichnungsprozess auswählt, wenn der Empfangsabschnitt das digitale Signal (101) empfängt, und den zweiten Kodierungs-Aufzeichnungsprozess auswählt, wenn der Empfangsabschnitt das analoge Signal (102) empfängt; und

der Berechnungsabschnitt (115) die Restdauer durch Ausführen des zweiten Berechnungsprozesses für eine Restmenge, weiterhin beruhend auf einer aufgezeichneten Dauer, die eine Zeitdauer darstellt, für die ein Aufzeichnungsprozess ausgeführt wurde, und auf einer Aufzeichnungsrate, berechnet.

4. Datenverarbeitungsvorrichtung nach Anspruch 3, weiterhin umfassend einen Speicher zum Speichern einer Referenz-Aufzeichnungsdauer, wobei die Referenz-Aufzeichnungsdauer eine Maximaldauer darstellt, für die die Programmdaten auf das unbenutzte Speichermedium (112) aufgezeichnet werden können,

wobei der Berechnungsabschnitt (115) einen Referenzwert der aufgezeichneten Dauer berechnet, indem er die aufgezeichnete Dauer mit der Aufzeichnungsrate normiert, eine Referenz-Restdauer bestimmt, indem er den Referenzwert der aufgezeichneten Dauer von der in dem Speicher gespeicherten Referenz-Aufzeichnungsdauer subtrahiert, und die Restdauer beruhend auf der Referenz-Restdauer und auf der Kodierrate berechnet.

5. Datenverarbeitungsvorrichtung nach Anspruch 1, wobei

die Speichermedien (112) dem Typ nach abhängig von der Aufzeichnungskapazität unterschieden werden,

der Empfangsabschnitt ein digitales Signal (101) empfängt;

der Aufzeichnungs-Verarbeitungsabschnitt (121) den Stream-Aufzeichnungsprozess für jedes Speichermedium (112) mit einer Aufzeichnungskapazität, die größer oder gleich einer vorbestimmten Referenzkapazität ist, auswählt; und

der Berechnungsabschnitt (115) den ersten Berechnungsprozess für eine Restmenge auswählt.

6. Datenverarbeitungsvorrichtung nach Anspruch 5, wobei das Signal (101, 102) Programminformation enthält, die eine Übertragungsrate und eine Sendedauer der Programmdaten spezifiziert,

die Datenverarbeitungsvorrichtung weiterhin einen Kontroller (108) zum Extrahieren der Programminformation aus dem empfangenen Signal (101, 102) umfasst;

wobei der Berechnungsabschnitt (115) die Restdauer basierend auf der extrahierten Übertragungsrate und Sendedauer berechnet.

7. Datenverarbeitungsvorrichtung nach Anspruch 6, wobei der Berechnungsabschnitt (115) eine Datenmenge eines jeden von einem oder mehreren Programmdaten beruhend auf der Übertragungsrate und Sendedauer berechnet,

eine kumulative Datenmenge bestimmt, erhalten durch kumulatives Addieren jeder Datenmenge bis zum Überschreiten der Restkapazität, und Bestimmen einer kumulativen Sendedauer, erhalten durch kumulatives Addieren jeder Sendedauer, die der addierten Datenmenge entspricht, und

die Restdauer durch Subtrahieren einer Sendedauer, die einer jeglichen Datenmenge, die die Restkapazität übersteigt, entspricht, von der kumulativen Sendedauer, bestimmt.

8. Datenverarbeitungsvorrichtung nach Anspruch 1, wobei
die Speichermedien (112) dem Typ nach abhängig von der Aufzeichnungskapazität unterschieden werden,
der Empfangsabschnitt ein analoges Signal (102) empfängt;
der Aufzeichnungs-Verarbeitungsabschnitt (121) den Kodierungs-Aufzeichnungsprozess für jedes Speichermedium mit einer Aufzeichnungskapazität, die größer oder gleich einer vorbestimmten Referenzkapazität ist, auswählt; und
der Berechnungsabschnitt (115) die Restdauer durch Ausführen des zweiten Berechnungsprozesses für eine Restmenge, weiterhin beruhend auf der Restkapazität des Speichermediums (112) ausführt.

9. Datenverarbeitungsvorrichtung nach Anspruch 1, wobei der Anzeigeabschnitt (114) weiterhin Information anzeigt, die den von dem Aufzeichnungs-Verarbeitungsabschnitt (121) ausgewählten Aufzeichnungsprozess identifiziert.

10. Datenverarbeitungsvorrichtung nach Anspruch 9, wobei der Anzeigeabschnitt (114) wenigstens die Kodierrate, eine Auflösung, oder eine Frequenz anzeigt, wenn der Kodierungs-Aufzeichnungsprozess von dem Aufzeichnungs-Verarbeitungsabschnitt (121) ausgewählt wird.

11. Datenverarbeitungsverfahren des Schreibens von Programmdaten auf eine Mehrzahl von Typen von Speichermedien (112) in einer Datenverarbeitungsvorrichtung (10), umfassend die Schritte:

Laden eines Speichermediums (112) auf die Datenverarbeitungsvorrichtung (10); und
Empfangen eines Programmdaten betreffenden Signals (101, 102);
Bestimmen (703, 707) eines Typs eines geladenen Speichermediums (112),
Auswählen (704) entweder eines Stream-Aufzeichnungsprozesses (705), in dem die Programmdaten weder dekodiert noch kodiert werden, oder eines Kodierungs-Aufzeichnungsprozesses (706), in dem die Programmdaten wenigstens kodiert werden;
Aufzeichnen (705, 706) aus dem Signal (101, 102) erhaltener Programmdaten auf das Speichermedium (112), durch den Stream-Aufzeichnungsprozess (705) oder den Kodierungs-Aufzeichnungsprozess (706) in Übereinstimmung mit einem Typ des Speichermediums (112);
Auswählen (602) eines ersten Berechnungsprozesses (603) für eine Restmenge, der auf einer Restkapazität des Speichermediums (112) und auf einer Übertragungsrate der Programmdaten beruht, wenn ein Stream-Aufzeichnungsprozess (705) ausgewählt wird; oder eines zweiten Berechnungsprozesses (605) für eine Restmenge, der auf einer Kodierrate beruht, wenn ein Kodierungs-Aufzeichnungsprozess (706) ausgewählt wird, und Berechnen einer Restdauer, für die es möglich ist, Aufzeichnen auf das Speichermedium (112) auszuführen, mit dem ausgewählten Berechnungsprozess (603, 605); und
Anzeigen der berechneten Restdauer.

12. Datenverarbeitungsverfahren nach Anspruch 11, wobei
die Speichermedien (112) dem Typ nach abhängig von der Aufzeichnungskapazität unterschieden werden;
der Empfangsschritt ein digitales Signal (101) oder ein analoges Signal (102) empfängt;
der Aufzeichnungsschritt den Kodierungs-Aufzeichnungsprozess (706) für jedes Speichermedium (112) mit einer Aufzeichnungskapazität, die kleiner oder gleich einer vorbestimmten Referenzkapazität ist, auswählt; und
der Berechnungsschritt (605) einen zweiten Berechnungsprozess für eine Restmenge auswählt.

13. Datenverarbeitungsverfahren nach Anspruch 12, wobei
der Kodierungs-Aufzeichnungsprozess einen ersten Kodierungs-Aufzeichnungsprozess (706) des Unterziehens der Programmdaten einem Dekodier- und danach einem Kodierprozess und einen zweiten Kodierungs-Aufzeichnungsprozess (709; 710) des Unterziehens der Programmdaten einem Kodierprozess einschließt;
der Aufzeichnungsschritt den ersten Kodierungs-Aufzeichnungsprozess (706) auswählt, wenn der Empfangsabschnitt das digitale Signal (101) empfängt, und den zweiten Kodierungs-Aufzeichnungsprozess (709; 710) auswählt, wenn der Empfangsabschnitt das analoge Signal (102) empfängt; und
wobei der Berechnungsschritt die Restdauer durch Ausführen des zweiten Berechnungsprozesses (605) für eine Restmenge, weiterhin beruhend auf einer Aufzeichnungsrate und einer aufgezeichneten Dauer, die eine Zeitdauer darstellt, für die ein Aufzeichnungsprozess ausgeführt wurde, berechnet.

**14.** Datenverarbeitungsverfahren nach Anspruch 13, weiterhin umfassend einen Schritt des Speicherns einer Referenz-Aufzeichnungsdauer, wobei die Referenz-Aufzeichnungsdauer eine Maximaldauer darstellt, für die die Programmdaten auf das unbenutzte Speichermedium (112) aufgezeichnet werden können; wobei der Berechnungsschritt einen Referenzwert der aufgezeichneten Dauer berechnet, indem er die aufgezeichnete Dauer mit der Aufzeichnungsrate normiert, eine Referenz-Restdauer bestimmt, indem er den Referenzwert der aufgezeichneten Dauer von der in dem Speicher gespeicherten Referenz-Aufzeichnungsdauer subtrahiert, und die Restdauer beruhend auf der Referenz-Restdauer und auf der Kodierrate berechnet.

**15.** Datenverarbeitungsverfahren nach Anspruch 11, wobei die Speichermedien (112) dem Typ nach abhängig von der Aufzeichnungskapazität unterschieden werden; der Empfangsschritt ein digitales Signal (101) empfängt; der Aufzeichnungsschritt den Kodierungs-Aufzeichnungsprozess (705) für jedes Speichermedium (112) mit einer Aufzeichnungskapazität, die größer oder gleich einer vorbestimmten Referenzkapazität ist, auswählt; und der Berechnungsschritt (603) den ersten Berechnungsprozess für eine Restmenge auswählt.

**16.** Datenverarbeitungsverfahren nach Anspruch 15, wobei das Signal (101, 102) Programminformation enthält, die eine Übertragungsrate und eine Sendedauer der Programmdaten spezifiziert, das Datenverarbeitungsverfahren weiter einen Schritt des Extrahierens der Programminformation aus dem empfangenen Signal (101, 102) umfasst; wobei der Berechnungsschritt (603, 605) die Restdauer basierend auf der extrahierten Übertragungsrate und Sendedauer berechnet.

**17.** Datenverarbeitungsverfahren nach Anspruch 16, wobei der Berechnungsschritt (603, 605) eine Datenmenge eines jeden von einem oder mehreren Programmdaten beruhend auf der Übertragungsrate und Sendedauer berechnet, eine kumulative Datenmenge bestimmt, erhalten durch kumulatives Addieren jeder Datenmenge bis zum Überschreiten der Restkapazität, und Bestimmen einer kumulativen Sendedauer, erhalten durch kumulatives Addieren jeder Sendedauer, die der addierten Datenmenge entspricht, und die Restdauer durch Subtrahieren einer Sendedauer, die einer jeglichen Datenmenge, die die Restkapazität übersteigt, entspricht, von der kumulativen Sendedauer, bestimmt.

**18.** Datenverarbeitungsverfahren nach Anspruch 11, wobei die Speichermedien (112) dem Typ nach abhängig von der Aufzeichnungskapazität unterschieden werden; der Empfangsschritt ein analoges Signal (102) empfängt; der Aufzeichnungsschritt den Kodierungs-Aufzeichnungsprozess für jedes Speichermedium (112) mit einer Aufzeichnungskapazität, die größer oder gleich einer vorbestimmten Referenzkapazität ist, auswählt; und der Berechnungsschritt die Restdauer durch Ausführen des zweiten Berechnungsprozesses für eine Restmenge, weiterhin beruhend auf der Restkapazität des Speichermediums (112) ausführt.

**19.** Datenverarbeitungsverfahren nach Anspruch 11, wobei der Anzeigeschritt weiterhin Information anzeigt, die den von dem Aufzeichnungsschritt ausgewählten Aufzeichnungsprozess identifiziert.

**20.** Datenverarbeitungsverfahren nach Anspruch 19, wobei der Anzeigeschritt wenigstens die Kodierrate, eine Auflösung, oder eine Frequenz anzeigt, wenn der Kodierungs-Aufzeichnungsprozess von dem Aufzeichnungsschritt ausgewählt wird.

**Revendications**

**1.** Appareil de traitement de données pouvant écrire des données de programmes sur une pluralité de types de supports de stockage (112), comprenant :

une section de réception destinée à recevoir un signal (101, 102) concernant les données de programmes, une section de détermination (111) destinée à déterminer un type de support de stockage (112) ayant été chargé sur l'appareil de traitement de données, une section de traitement d'enregistrement (121) destinée à enregistrer des données de programmes obtenues à partir du signal sur le support de stockage (112) via l'un des traitements suivants : un traitement d'enregistrement par flux dans lequel les données de programme ne sont ni décodées ni codées, ainsi qu'un traitement d'enregistrement par codage dans lequel les données de programmes sont au moins codées,

**caractérisé par**

une section de sélection (104) destinée à sélectionner l'un du traitement d'enregistrement par flux et du traitement d'enregistrement par codage en fonction du type de support de stockage (112),

une section de calcul (115) destinée à sélectionner un premier traitement de calcul de quantité restante qui est fondé sur la capacité restante du support de stockage (112) et sur un débit de transmission des données de programmes lorsqu'un traitement d'enregistrement par flux est sélectionné, ou bien un second traitement de calcul de quantité restante qui est fondé sur un débit de codage lorsqu'un traitement d'enregistrement par codage est sélectionné, la section de calcul (115) calculant grâce au traitement de calcul sélectionné la durée restante pour laquelle il est possible d'exécuter un enregistrement sur le support de stockage (112), et

une section d'affichage (114) destinée à afficher la durée restante calculée.

2. Appareil de traitement de données selon la revendication 1, dans lequel,

les supports de stockage (112) sont différenciés selon le type en fonction de la capacité d'enregistrement,

la section de réception reçoit l'un des signaux parmi un signal numérique (101) et un signal analogique (102),

la section de traitement d'enregistrement (121) sélectionne le traitement d'enregistrement par codage pour tout support de stockage (112) présentant une capacité d'enregistrement inférieure ou égale à une capacité de référence prédéterminée, et

la section de calcul (115) sélectionne un second traitement de calcul de quantité restante.

3. Appareil de traitement de données selon la revendication 2, dans lequel

le traitement d'enregistrement par codage inclut un premier traitement d'enregistrement par codage consistant à soumettre les données de programmes à un traitement de décodage puis de codage et à un second traitement d'enregistrement par codage consistant à soumettre les données de programmes à un traitement de codage,

la section de traitement d'enregistrement (121) sélectionne le premier traitement d'enregistrement par codage lorsque la section de réception reçoit le signal numérique (101), et elle sélectionne le second traitement d'enregistrement par codage lorsque la section de réception reçoit le signal analogique (102), et

la section de calcul (115) calcule la durée restante en exécutant le premier traitement de calcul de quantité restante fondé en plus sur une durée enregistrée représentant une valeur de temps pour laquelle un traitement d'enregistrement a été exécuté, et sur un débit d'enregistrement.

4. Appareil de traitement de données selon la revendication 3, comprenant en outre une mémoire permettant de stocker une durée d'enregistrement de référence, la durée d'enregistrement de référence représentant une durée maximale pour laquelle les données de programmes peuvent être enregistrées sur le support de stockage (112) inutilisé,

dans lequel la section de calcul (115) calcule une durée d'enregistrement de référence en normalisant la durée d'enregistrement avec le débit d'enregistrement, elle détermine une durée restante de référence en soustrayant la durée d'enregistrement de référence de la durée d'enregistrement de référence stockée en mémoire, et elle calcule la durée restante sur la base de la durée restante de référence et sur le débit de codage.

5. Appareil de traitement de données selon la revendication 1, dans lequel

les supports de stockage (112) sont différenciés selon le type en fonction de la capacité d'enregistrement,

la section de réception reçoit un signal numérique (101), la section de traitement d'enregistrement (121) sélectionne le traitement d'enregistrement par flux pour tout support de stockage (112) présentant une capacité d'enregistrement supérieure ou égale à une capacité de référence prédéterminée, et

la section de calcul (115) sélectionne le premier traitement de calcul de quantité restante.

6. Appareil de traitement de données selon la revendication 5, dans lequel le signal (101, 102) inclut des informations de programmes spécifiant un débit de transmission et une durée de diffusion des données de programmes,

l'appareil de traitement de données comprend en outre un contrôleur (108) permettant d'extraire les informations de programmes du signal (101, 102) reçu,

dans lequel la section de calcul (115) calcule la durée restante sur la base du débit de transmission et de la durée de diffusion extraits.

7. Appareil de traitement de données selon la revendication 6, dans lequel la section de calcul (115) calcule une quantité de données de chacune de données de programmes ou plus sur la base du débit de transmission et de la durée de diffusion,

elle détermine une quantité de données cumulative obtenue en ajoutant de manière cumulative chaque quantité de données jusqu'à dépasser la capacité restante, et en déterminant une durée cumulative de diffusion obtenue en ajoutant de manière cumulative chaque durée de diffusion correspondant à la quantité de données ajoutée, et elle détermine la durée restante en soustrayant une durée de diffusion correspondant à une quelconque quantité de données dépassant la capacité restante de la durée cumulative de diffusion.

8. Appareil de traitement de données selon la revendication 1, dans lequel
les supports de stockage (112) sont différenciés selon le type en fonction de la capacité d'enregistrement,
la section de réception reçoit un signal analogique (102),
la section de traitement d'enregistrement (121) sélectionne le traitement d'enregistrement par codage pour tout support de stockage présentant une capacité d'enregistrement supérieure ou égale à une capacité de référence prédéterminée, et
la section de calcul (115) calcule la durée restante en exécutant le second traitement de calcul de quantité restante fondé en plus sur la capacité restante du support de stockage (112).

9. Appareil de traitement de données selon la revendication 1, dans lequel la section d'affichage (114) affiche en outre des informations identifiant le traitement d'enregistrement sélectionné par la section de traitement d'enregistrement (121).

10. Appareil de traitement de données selon la revendication 9, dans lequel la section d'affichage (114) affiche au moins l'un du débit de codage, d'une résolution et d'une fréquence si le traitement d'enregistrement par codage est sélectionné par la section de traitement d'enregistrement (121).

11. Procédé de traitement de données consistant à écrire sur une pluralité de types de supports de stockage (112) des données de programmes dans un appareil de traitement de données (10), comprenant les étapes consistant à :

charger un support de stockage (112) sur l'appareil de traitement de données (10), et
recevoir un signal (101, 102) concernant des données de programmes,
déterminer (703, 707) le type de support de stockage (112) ayant été chargé,
sélectionner (704) l'un d'un traitement d'enregistrement par flux (705) dans lequel les données de programmes ne sont ni décodées ni codées, et d'un traitement d'enregistrement par codage (706) dans lequel les données de programmes sont au moins codées,
enregistrer (705, 706) des données de programmes obtenues à partir du signal (101, 102) sur le support de stockage (112) via l'un du traitement d'enregistrement par flux (705) et du traitement d'enregistrement par codage (706) en fonction du type de support de stockage (112),
sélectionner (602) un premier traitement de calcul de quantité restante (603) qui est fondé sur la capacité restante du support de stockage (112) et sur un débit de transmission des données de programmes lorsque le traitement d'enregistrement par flux (705) est sélectionné,
ou bien un second traitement de calcul de quantité restante (605) qui est fondé sur un débit de codage lorsque le traitement d'enregistrement par codage (706) est sélectionné, et calculer, grâce au traitement de calcul sélectionné (603, 605) une durée restante pour laquelle il est possible d'exécuter un enregistrement sur le support de stockage (112), et
afficher la durée restante calculée.

12. Procédé de traitement de données selon la revendication 11, dans lequel
les supports de stockage (112) sont différenciés selon le type en fonction de la capacité d'enregistrement,
l'étape de réception reçoit l'un des signaux parmi un signal numérique (101) et un signal analogique (102),
l'étape d'enregistrement sélectionne le traitement d'enregistrement par codage (706) pour tout support de stockage (112) présentant une capacité d'enregistrement inférieure ou égale à une capacité de référence prédéterminée, et
l'étape de calcul sélectionne un second traitement de calcul de quantité restante (605).

13. Procédé de traitement de données selon la revendication 12, dans lequel
le traitement d'enregistrement par codage inclut un premier traitement d'enregistrement par codage (706) consistant à soumettre les données de programmes à un traitement de décodage puis de codage, et à un second traitement d'enregistrement par codage (709 ; 710) consistant à soumettre les données de programmes à un traitement de codage,
l'étape d'enregistrement sélectionne le premier traitement d'enregistrement par codage (706) lorsque la section de réception reçoit le signal numérique (101), et elle sélectionne le second traitement d'enregistrement par codage (709 ; 710) lorsque la section de réception reçoit le signal analogique (102), et
l'étape de calcul effectue le calcul de la durée restante en exécutant le second traitement de calcul de quantité restante (605) fondé en plus sur un débit d'enregistrement et sur une durée d'enregistrement représentant la valeur de temps pour laquelle un traitement d'enregistrement a été exécuté.

14. Procédé de traitement de données selon la revendication 13, comprenant en outre une étape consistant à stocker une durée d'enregistrement de référence, la durée d'enregistrement de référence représentant une durée maximale pour laquelle les données de programmes peuvent être enregistrées sur le support de stockage (112) inutilisé, dans lequel l'étape de calcul effectue le calcul d'une durée d'enregistrement de référence en normalisant la durée d'enregistrement avec le débit d'enregistrement, elle détermine une durée restante de référence en soustrayant la durée d'enregistrement de référence de la durée d'enregistrement de référence stockée en mémoire, et elle calcule la durée restante sur la base de la durée restante de référence et sur le débit d'enregistrement.

15. Procédé de traitement de données selon la revendication 11, dans lequel
les supports de stockage (112) sont différenciés selon le type en fonction de la capacité d'enregistrement,
l'étape de réception reçoit un signal numérique (101), l'étape d'enregistrement sélectionne le traitement d'enregistrement par flux (705) pour tout support de stockage (112) présentant une capacité d'enregistrement supérieure ou égale à une capacité de référence prédéterminée, et
l'étape de calcul sélectionne le premier traitement de calcul de quantité restante (603).

16. Procédé de traitement de données selon la revendication 15, dans lequel le signal (101, 102) inclut des informations de programmes spécifiant un débit de transmission et une durée de diffusion des données de programmes,
le procédé de traitement de données comprend en outre une étape consistant à extraire les informations de programmes du signal (101, 102) reçu,
dans lequel l'étape de calcul (603, 605) calcule la durée restante sur la base du débit de transmission et de la durée de diffusion extraits.

17. Procédé de traitement de données selon la revendication 16, dans lequel l'étape de calcul (603, 605) calcule une quantité de données de chacune de données de programmes ou plus sur la base du débit de transmission et de la durée de diffusion,
elle détermine une quantité de données cumulative obtenue en ajoutant de manière cumulative chaque quantité de données jusqu'à dépasser la capacité restante, et en déterminant une durée cumulative de diffusion obtenue en ajoutant de manière cumulative chaque durée de diffusion correspondant à la quantité de données ajoutée, et elle détermine la durée restante en soustrayant une durée de diffusion correspondant à une quelconque quantité de données dépassant la capacité restante de la durée cumulative de diffusion.

18. Procédé de traitement de données selon la revendication 11, dans lequel
les supports de stockage (112) sont différenciés selon le type en fonction de la capacité de stockage,
l'étape de réception reçoit un signal analogique (102), l'étape d'enregistrement sélectionne le traitement d'enregistrement par codage pour tout support de stockage (112) présentant une capacité d'enregistrement supérieure ou égale à une capacité de référence prédéterminée, et
l'étape de calcul effectue le calcul de la durée restante en exécutant le second traitement de calcul de quantité restante fondé en plus sur la capacité restante du support de stockage (112).

19. Procédé de traitement de données selon la revendication 11, dans lequel l'étape d'affichage affiche en outre des informations identifiant le traitement d'enregistrement sélectionné par l'étape d'enregistrement.

20. Procédé de traitement de données selon la revendication 19, dans lequel l'étape d'affichage affiche au moins l'un du débit de codage, d'une résolution et d'une fréquence si le traitement d'enregistrement par codage est sélectionné par l'étape d'enregistrement.

FIG.1

10

- Digital Stream Signal — 101
- Analog Television Signal — 102

103 — Signal Selector

104 — Process Selector

120 — Data Rate Detector

To System Controller

121

105 — Stream Recording Processing Section
106 — Re-Encode Recording Processing Section
107 — Self-Encode Recording Processing Section

110

112

111 — Medium Determination Section
113 — Remaining Capacity Detection Section
119 — Recording Data Detection Section

108 — System Controller

109 — Channel Setting Section

122 — Table Memory

419

420

123 — Videorecording Mode Setting Section

115

Remaining Amount Calculation Process(1)
Remaining Amount Calculation Process (2)
Remaining Amount Calculation Process (3)

114 — Display Section

FIG.2

EP 1 608 166 B1

*FIG.3*

Transport Stream → 310

**Transport Stream Decoder** — 301

311 → Video Decoder — 302
302 → Resolution Determination — 303
Video Decoder — 313 → Down Converter — 304
Down Converter — 314 → Video Encoder — 305
Video Encoding Parameter(s) → Video Encoder
Video Encoder — 315 → System Encoder — 308

312 → Audio Decoder — 306
Audio Decoder — 316 → Audio Encoder — 307
Audio Encoding Parameter(s) → Audio Encoder
Audio Encoder — 317 → System Encoder

System Encoder — 318 → Encoded Stream

Control Signal → System Encoder

106

38

# FIG.4

| Input Signal Type | Medium Type | Recording Process Type | Remaining Amount Calculation Process Type | Control Type |
|---|---|---|---|---|
| Digital Stream Signal | Ultrahigh Density RAM | Stream Recording | Remaining Amount Calculation Process (1) | Capacity-Base |
| | DVD-RAM | PS Re-Encode Recording | Remaining Amount Calculation Process (3) | Time-Base |
| Analog Television Signal | Ultrahigh Density RAM | TS Self-Encode Recording | Remaining Amount Calculation Process (2) | Capacity-Base |
| | DVD-RAM | PS Self-Encode Recording | Remaining Amount Calculation Process (3) | Time-Base |

419

EP 1 608 166 B1

*FIG.5*

(a)

401　402　403

Stream　Self　DC 　114

(b)

Stream

(c)

Self

(d)

DC

## FIG.6

```
        ┌─────────────────────────┐
        │   START of Remaining     │
        │ Amount Calculation Process│
        └───────────┬─────────────┘
                    │
                    ▼
                              601
        ┌─────────────────────────┐
        │   Determine Recording    │
        │      Process Type        │
        └───────────┬─────────────┘
                    │
                    ▼
                              602    PS Self-Encode Recording
                   ◇                 PS Re-Encode Recording
Stream Recording  ╱ Judge ╲
◄─────────────── ◇ Recording Process ◇ ──────────────►
                  ╲   Type   ╱
                   ◇
                    │ TS Self-Encode
                    ▼
    603              604                    605
┌──────────────┐ ┌──────────────┐   ┌──────────────┐
│Execute Remaining│ │Execute Remaining│ │Execute Remaining│
│Amount Calculation│ │Amount Calculation│ │Amount Calculation│
│  Process (1)  │ │  Process (2)  │   │  Process (3)  │
└──────┬───────┘ └──────┬───────┘   └──────┬───────┘
       │                │                  │
       └────────────────┼──────────────────┘
                        ▼
                 ┌─────────────┐
                 │     END     │
                 └─────────────┘
```

**FIG.7**

START

701 Acquire Channel

702 Determine Input

Analog | Digital

707 Acquire Medium Type

703 Acquire Medium Type

708 Determine Medium
Ultrahigh Density | DVD

704 Determine Medium
Ultrahigh Density | DVD

709 TS Self-Encode Recording Process

710 PS Self-Encode Recording Process

705 Stream Recording Process

706 PS Re-Encode Recording Process

END

## FIG.8

```
        ┌──────────────────────┐
        │  Remaining Amount    │
        │ Calculation Process (1)│
        └──────────┬───────────┘
                   │
                   ▼
        ┌──────────────────────┐  801
        │  Acquire Remaining   │
        │    Capacity CR       │
        └──────────┬───────────┘
                   │
                   ▼
        ┌──────────────────────┐  802
        │ Acquire Current Time Tcur│
        └──────────┬───────────┘
                   │
                   ▼
        ┌──────────────────────┐  803
        │  Acquire Data Rate Rcur │
        └──────────┬───────────┘
                   │
                   ▼
        ┌──────────────────────┐  804
        │ Calculate Reference  │
        │  Remaining Amount    │
        │   TR = CR/Rcur       │
        │  Tend = Tcur + TR    │
        └──────────┬───────────┘
```

420

Program Information Table

$TR = CR/Rcur$

$Tend = Tcur + TR$

808 — Increment Program Index by one

807 — Correct Remaining Amount
$dT = Tend - Tnext$
$dC = dT \times Rcur$
$dTR = dC / Rnext$
$Tend = Tnext + dTR$

805 — Acquire Start Time Tnext and Data Rate Rnext of Next Program

806 — Tend < Tnext

NO

YES

809 — $TR = Tend - Tcur$

END

## FIG.9

| Program   | Start Time | Data Rate |
|-----------|-----------|-----------|
| Program a | T(a)      | R(a)      |
| Program b | T(b)      | R(b)      |
| Program c | T(c)      | R(c)      |
| Program d | T(d)      | R(d)      |

420

*FIG.10*

EP 1 608 166 B1

## FIG.11

```
        ┌─────────────────────────┐
        │   Remaining Amount      │
        │ Calculation Process (1) │
        └────────────┬────────────┘
                     │
                     ▼                    1101
        ┌─────────────────────────────┐
        │ Initialize Remaining Amount TR │
        │ and Cumulative Data Amount C  │
        │      TR=0、 C=0              │
        └────────────┬────────────────┘
                     │
                     ▼           1102
        ┌──────────────────────┐
        │  Acquire Remaining   │
        │    Capacity CR       │
        └──────────┬───────────┘
                   │
                   ▼                      1103
        ┌──────────────────────┐
        │   Acquire Data Rate R │
        └──────────┬───────────┘
                   │
                   ▼                      1104
        ┌──────────────────────────┐
        │ Acquire Program Duration P │
        └──────────┬───────────────┘
                   │
                   ▼                      1105
        ┌──────────────────────────────┐
        │ Calculate Data Amount of Program │
        │        Cp = P × R            │
        └──────────┬───────────────────┘
                   │
                   ▼                      1106
        ┌──────────────────────────────┐
        │ Update Cumulative Data Amount │
        │        C = C + Cp            │
        └──────────┬───────────────────┘
                   │
                   ▼                      1107
        ┌──────────────────────────────┐
        │  Update Remaining Duration   │
        │        TR = TR + P          │
        └──────────┬───────────────────┘
                   │
                   ▼         1108
              ◇ C > CR ◇ ──NO──
                   │
                  YES
                   ▼                      1110
        ┌──────────────────────────────┐
        │ Correct Remaining Duration   │
        │  TR = TR − (C − CR) / R     │
        └──────────┬───────────────────┘
                   │
                   ▼
              ┌─────────┐
              │   END   │
              └─────────┘
```

**420** — Program Information Table

**1109** — Increment Program Index by one

$Cp = P \times R$

$C = C + Cp$

$TR = TR + P$

$C > CR$

$TR = TR - (C - CR) / R$

## FIG.12

| Management Information | Clip (#1) | Clip (#2) | . . . |
|---|---|---|---|

1001  1002  1003

| Basic Manage-ment Information | Clip #1 Management Information | Clip #2 Management Information |
|---|---|---|

1004  1005  1006

| Clip Basic Information | Recording Type Identi-fication Information | Encoding Mode Information |
|---|---|---|

1007  1008  1009

## FIG.13

112

1101

20

1302
Reproduction Section → Video Signal/Audio Signal

1303
Recording Type Identification Section

1306
Display Section

1305
Management Information Acquisition Section

1304
Encoding Mode Identification Section

## FIG.14

START of Remaining Amount Calculation Process

1401

Determine Medium

Ultrahigh Density

DVD

1402

Determine Recording Process Type

1403

Judge Recording Process Type

Stream Recording

TS Self-Encode (Or TS Re-Encode Process)

1404

Execute Remaining Amount Calculation Process (1)

1405

Execute Remaining Amount Calculation Process (2)

1406

Execute Remaining Amount Calculation Process (3)

END

## FIG.15

START of Remaining Amount
Calculation Process

1501

Ultrahigh Density — Determine Medium — DVD

1502

Acquire Channel

1503

Digital — Determine Input — Analog

1504
Execute Remaining
Amount Calculation
Process (1)

1505
Execute Remaining
Amount Calculation
Process (2)

1506
Execute Remaining
Amount Calculation
Process (3)

終了

*FIG.16*

(a)

| Stream | LP | SP |
|--------|----|----|

501  502  503  114

(b)

| Stream |
|--------|

(c)

| LP |
|----|

(d)

| SP |
|----|

*FIG.17*

START of Recording Process

↓

Acquire Videorecording Mode — 1701

↓

Determine Mode — 1702

Manual ← → Auto

Manual Mode Recording Process — 1703

Auto mode Recording Process — 1704

↓

END

## FIG.18

| Videorecording Mode | Input Signal Type | Medium Type | Recording Process Type |
|---|---|---|---|
| Auto mode | Digital Stream Signal | Ultrahigh Density RAM | Stream Recording |
| | | DVD-RAM | PS Re-Encode Recording |
| | Analog Television Signal | Ultrahigh Density RAM | TS Self-Encode Recording |
| | | DVD-RAM | PS Self-Encode Recording |
| Manual Mode | Digital Stream Signal | Ultrahigh Density RAM | TS Re-Encode Recording |
| | | DVD-RAM | PS Re-Encode Recording |
| | Analog Television Signal | Ultrahigh Density RAM | TS Self-Encode Recording |
| | | DVD-RAM | PS Self-Encode Recording |

419

EP 1 608 166 B1

## FIG.19

```
        ┌─────────────────────┐
        │  START of Manual Mode │
        │   Recording Process   │
        └──────────┬──────────┘
                   │
                   ▼          1901
        ┌─────────────────────┐
        │   Acquire Channel    │
        └──────────┬──────────┘
                   │
                   ▼          1902
          ◇ Determine Input ◇
   Analog ◁─────────────────▷ Digital
```

START of Manual Mode Recording Process

1901 Acquire Channel

1902 Determine Input — Analog / Digital

1907 Acquire Medium Type

1908 Determine Medium — Ultrahigh Density / DVD

1903 Acquire Medium Type

1904 Determine Medium — Ultrahigh Density / DVD

1909 TS Self-Encode Recording Process

1910 PS Self-Encode Recording Process

1905 TS Re-Encode Recording Process

1906 PS Re-Encode Recording Process

END

*FIG.20*

(a)

| Auto    Stream |

114

(b)

| Auto |

(c)

|      |

## FIG.21

(a)  | Auto B-XP SP LP | ⌇ 114

(b)  | Auto |

(c)  | Auto        SP |

(d)  | B-XP |

(e)  | XP |

(f)  | SP |

(g)  | LP |

## FIG.22

419

| Inserted Medium | Input Source | | Recording Rate Used For Remaining Amount Calculation | Remaining Amount Calculation Type |
|---|---|---|---|---|
| Ultrahigh Density RAM Medium | BS Digital | HD Broadcast | 24Mbps | Remaining Amount Calculation (1) |
| | | SD Broadcast | 12Mbps | |
| | Terrestrial Digital | HD Broadcast | 18Mbps | |
| | | SD Broadcast | 9Mbps | |
| | Analog | | 5Mbps | Remaining Amount Calculation (2) |
| DVD Medium | BS Digital Terrestrial Digital Analog | | 5Mbps | Remaining Amount Calculation (3) |

## FIG.23

419

| Inserted Medium | Input Source | Recording Rate Used For Remaining Amount Calculation | Remaining Amount Calculation Type |
|---|---|---|---|
| Ultrahigh Density RAM Medium | BS Digital Terrestrial Digital Analog | 15Mbps | Remaining Amount Calculation (2) |
| DVD Medium | BS Digital Terrestrial Digital Analog | 10Mbps | Remaining Amount Calculation (3) |

## FIG.24

419

| Inserted Medium | Input Source | Recording Rate Used For Remaining Amount Calculation | Remaining Amount Calculation Type |
|---|---|---|---|
| Ultrahigh Density RAM Medium | BS Digital Terrestrial Digital Analog | 10Mbps | Remaining Amount Calculation (2) |
| DVD Medium | BS Digital Terrestrial Digital Analog | 10Mbps | Remaining Amount Calculation (3) |

## FIG.25

419

| Inserted Medium | Input Source | Recording Rate Used For Remaining Amount Calculation | Remaining Amount Calculation Type |
|---|---|---|---|
| Ultrahigh Density RAM Medium | BS Digital Terrestrial Digital Analog | 5Mbps | Remaining Amount Calculation (2) |
| DVD Medium | BS Digital Terrestrial Digital Analog | 5Mbps | Remaining Amount Calculation (3) |

## FIG.26

419

| Inserted Medium | Input Source | Recording Rate Used For Remaining Amount Calculation | Remaining Amount Calculation Type |
|---|---|---|---|
| Ultrahigh Density RAM Medium | BS Digital Terrestrial Digital Analog | 2. 5Mbps | Remaining Amount Calculation (2) |
| DVD Medium | BS Digital Terrestrial Digital Analog | 2. 5Mbps | Remaining Amount Calculation (3) |

## FIG.27

| Inserted Medium | Input Source | Operation | Display Pattern | |
|---|---|---|---|---|
| Uninserted | BS Digital Terrestrial Digital Analog | Stopped | Auto | |
| Ultrahigh Density RAM Medium | BS Digital Terrestrial Digital | Stopped | Auto | |
| | | Videorecording | | |
| | | Reproducing | | |
| | Analog | Stopped | Auto | |
| | | Videorecording | Auto | SP |
| | | Reproducing | | SP |
| DVD Medium | BS Digital Terrestrial Digital | Stopped | Auto | |
| | | Videorecording | Auto | SP |
| | | Reproducing | | SP |
| | Analog | Stopped | Auto | |
| | | Videorecording | Auto | SP |
| | | Reproducing | | SP |

## FIG.28

| Inserted Medium | Input Source | Operation | Display Pattern |
|---|---|---|---|
| Uninserted | BS Digital Terrestrial Digital Analog | Stopped | B-XP |
| Ultrahigh Density RAM Medium | BS Digital Terrestrial Digital Analog | Stopped | |
| | | Videorecording | |
| | | Reproducing | |
| DVD Medium | BS Digital Terrestrial Digital Analog | Stopped | B-XP |
| | | Videorecording | XP |
| | | Reproducing | |

## FIG.29

| Inserted Medium | Input Source | Operation | Display Pattern |
|---|---|---|---|
| Uninserted | BS Digital Terrestrial Digital Analog | Stopped | XP |
| Ultrahigh Density RAM Medium | BS Digital Terrestrial Digital Analog | Stopped | |
| | | Videorecording | |
| | | Reproducing | |
| DVD Medium | BS Digital Terrestrial Digital Analog | Stopped | |
| | | Videorecording | |
| | | Reproducing | |

## FIG.30

| Inserted Medium | Input Source | Operation | Display Pattern |
|---|---|---|---|
| Uninserted | BS Digital Terrestrial Digital Analog | Stopped | SP |
| Ultrahigh Density RAM.Medium | BS Digital Terrestrial Digital Analog | Stopped | |
| | | Videorecording | |
| | | Reproducing | |
| DVD Medium | BS Digital Terrestrial Digital Analog | Stopped | |
| | | Videorecording | |
| | | Reproducing | |

## FIG.31

| Inserted Medium | Input Source | Operation | Display Pattern |
|---|---|---|---|
| Uninserted | BS Digital Terrestrial Digital Analog | Stopped | |
| Ultrahigh Density RAM Medium | BS Digital Terrestrial Digital Analog | Stopped | |
| | | Videorecording | |
| | | Reproducing | LP |
| DVD Medium | BS Digital Terrestrial Digital Analog | Stopped | |
| | | Videorecording | |
| | | Reproducing | |

## FIG.32

(a)    | Auto    LP    SP | ⟿ 114

(b)    | Auto |

(c)    | Auto    LP |

(d)    | Auto         SP |

(e)    | LP |

(f)    | SP |

## FIG.33

(a)   | Auto   Stream   LP   SP |  ⌇ 114

(b)   | Auto   Stream |

(c)   | Auto                    LP |

(d)   | Auto                    SP |

(e)   |                         LP |

(f)   |                         SP |

**EP 1 608 166 B1**

**REFERENCES CITED IN THE DESCRIPTION**

**Patent documents cited in the description**

- JP 7023339 A
- JP 11328937 A
- JP 11112897 A
- EP 1168347 A2
- EP 1206134 A2
- JP 2002222586 A
- JP 2002313067 A
- JP 2002374498 A